(19) Europäisches Patentamt / European Patent Office / Office européen des brevets

(11) **EP 4 576 803 A1**

(12) **EUROPEAN PATENT APPLICATION**
published in accordance with Art. 153(4) EPC

(43) Date of publication:
**25.06.2025 Bulletin 2025/26**

(21) Application number: **23876480.7**

(22) Date of filing: **19.09.2023**

(51) International Patent Classification (IPC):
**H04N 23/951** (2023.01)

(52) Cooperative Patent Classification (CPC):
**G06T 5/50; G06T 5/70; G06T 5/73; H04N 23/951**

(86) International application number:
**PCT/CN2023/119713**

(87) International publication number:
**WO 2024/078275 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.10.2022 CN 202211263488**

(71) Applicant: **Huawei Technologies Co., Ltd.**
**Shenzhen, Guangdong 518129 (CN)**

(72) Inventors:
• **GENG, Yong**
  **Shenzhen, Guangdong 518129 (CN)**
• **ZENG, Junjie**
  **Shenzhen, Guangdong 518129 (CN)**
• **HUANG, Jianhui**
  **Shenzhen, Guangdong 518129 (CN)**
• **ZHANG, Hua**
  **Shenzhen, Guangdong 518129 (CN)**
• **QIAN, Kang**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **IMAGE PROCESSING METHOD AND APPARATUS, ELECTRONIC DEVICE AND STORAGE MEDIUM**

(57) This application is applicable to the field of data processing technologies, and provides an image processing method and apparatus, an electronic device, and a storage medium. The method includes: obtaining a first image based on a first exposure parameter, obtaining a second image group based on a second exposure parameter, and obtaining, through an event sensor, event data corresponding to the first image, in response to a photographing instruction received when an electronic device is in a moving state, where the second exposure parameter is determined based on the moving state; deblurring the first image based on the event data to generate a primary corrected image; and performing image fusion on the second image group and the primary corrected image to generate a secondary corrected image. According to the technical solutions provided in this application, when an image is deblurred, imaging quality of the image is ensured, and a definition of the output image is improved.

Start a camera application

↓

Display a down-sampled captured image on a preview interface

┌─────────────────────── S501 ───────────────────────┐

Receive a photographing operation ⌐ S501.1

↓

In a moving state?

— No → Obtain a target image based on a first exposure parameter ⌐ S501.2

↓ Yes

Determine a motion level based on a motion parameter ⌐ S501.3

└─────────────────────────────────────────────────────┘

↓

Determine a second exposure parameter

Second image | Second image | ... | Second image

Obtain a second image group ⌐ S502

First image

Obtain the first image based on a first exposure parameter

Event data

Obtain the event data through an event sensor

Primary corrected image ⌐ S503

↓

Generate a secondary corrected image ⌐ S504

FIG. 5

## Description

This application claims priority to Chinese Patent Application No. 202211263488.8, filed with the China National Intellectual Property Administration on October 10, 2022 and entitled "IMAGE PROCESSING METHOD AND APPARATUS, ELECTRONIC DEVICE, AND STORAGE MEDIUM", which is incorporated herein by reference in its entirety.

## TECHNICAL FIELD

This application relates to the field of data processing technologies, and in particular, to an image processing method and apparatus, an electronic device, and a storage medium.

## BACKGROUND

With continuous development of device technologies, quality of an image obtained by a camera module is increasingly high, and a user not only requires a bright color of the image, but also usually requires a high definition of the image. The high definition of the image is not only related to a resolution, but also related to a relative motion between the camera module and a photographed object during image photographing. However, during image photographing in a moving state, a large relative motion is inevitable. Therefore, how to capture a clear image in a case of a large motion amplitude becomes an urgent problem to be resolved.

In an existing image processing technology, when an object in a moving state is photographed, image photographing is usually completed by shortening exposure duration, that is, increasing a shutter speed. However, in some environments with low light intensity, shortening the exposure duration causes underexposure of the entire image, affecting an imaging effect. It can be learned that, in the existing image processing technology, in a photographing scenario in a moving state, neither an imaging effect nor image blur reduction can be considered.

## SUMMARY

Embodiments of this application provide an image processing method and apparatus, an electronic device, and a computer-readable storage medium, to resolve a problem in an existing image processing technology that in a photographing scenario in a moving state, neither an imaging effect nor jitter and blur reduction can be considered.

According to a first aspect, an embodiment of this application provides an image processing method, including:

obtaining a first image based on a first exposure parameter, obtaining a second image group based on a second exposure parameter, and obtaining, through an event sensor, event data corresponding to the first image, in response to a photographing instruction received when an electronic device is in a moving state, where the second exposure parameter is determined based on the moving state, the second image group includes at least one second image, and the second image has a higher definition than the first image;

deblurring the first image based on the event data to generate a primary corrected image; and

performing image fusion on the second image group and the primary corrected image to generate a secondary corrected image.

Implementing this embodiment of this application has the following beneficial effects: When it is detected that the photographing instruction is initiated in the moving state, the first image and the second image group are obtained based on different exposure parameters, and the event data corresponding to the first image is obtained when the foregoing two types of images are obtained. Because the event data records dynamic change information of a photographed object in the moving state, the first image may be deblurred based on the event data, to obtain the primary corrected image. In addition, the exposure parameter used for the second image group is inconsistent with the exposure parameter used when the first image is captured. Compared with the first image, a first image in the second image group has higher definition. Therefore, the second image group and the primary corrected image can further reduce a blur effect caused by relative motion, and finally the secondary corrected image is generated, to eliminate an image blur caused by motion. Compared with an existing image processing technology, this application does not simply shorten exposure duration to obtain a high-definition image, but improves an image definition by performing a double deblurring operation. First, the event data in the photographing process is obtained, and the first image is optimized once to obtain the primary corrected image. Then, image fusion is performed by using the high-definition second image group to further eliminate the blur caused by the relative motion and obtain the secondary corrected image. This ensures imaging quality of an image and improves a definition of the output image while the image blur is removed.

In a possible implementation of the first aspect, the obtaining a first image based on a first exposure parameter, obtaining at least one second image based on a second exposure parameter, and obtaining, through an event sensor, event data corresponding to the first image, in response to a photographing instruction initiated in a moving state includes:

before the first image is obtained, obtaining the second image group based on the second exposure parameter;

or

after the first image is obtained, obtaining the second image group based on the second exposure parameter.

In a possible implementation of the first aspect, the second image group includes a plurality of second images, and the performing image fusion on the second image group and the primary corrected image to generate a secondary corrected image includes:

using, as a first reference image corresponding to the first image, a second image that is in the second image group and for which a time difference between second photographing time of the second image and first photographing time of the first image is the smallest;
performing multi-frame fusion noise reduction on the first reference image based on all the second images in the second image group, to obtain a first noise-reduced image;
calculating first optical flow information between the first noise-reduced image and the primary corrected image, and determining, based on the first optical flow information, first spatial location compensation of the first noise-reduced image relative to the primary corrected image; and
performing, based on the first spatial location compensation, image fusion on the first noise-reduced image and the primary corrected image to obtain the secondary corrected image.

In a possible implementation of the first aspect, the second image group includes a third image group and a fourth image group, and the obtaining a first image based on a first exposure parameter, obtaining at least one second image based on a second exposure parameter, and obtaining, through an event sensor, event data corresponding to the first image, in response to a photographing instruction initiated in a moving state includes:

before the first image is obtained, obtaining the third image group based on the second exposure parameter;
and
after the first image is obtained, obtaining the fourth image group based on the second exposure parameter.

In a possible implementation of the first aspect, the performing image fusion on the second image group and the primary corrected image to generate a secondary corrected image includes:

using, as a second reference image corresponding to the first image, a second image that is in the third image group and for which a time difference between third photographing time of the second image and first photographing time of the first image is the smallest; and using, as a third reference image corresponding to the first image, a second image that is in the fourth image group and for which a time difference between fourth photographing time of the second image and the first photographing time of the first image is the smallest;
performing multi-frame fusion noise reduction on the second reference image based on all second images in the third image group to obtain a second noise-reduced image, and performing multi-frame fusion noise reduction on the third reference image based on all second images in the fourth image group to obtain a third noise-reduced image;
calculating second optical flow information between the second noise-reduced image and the primary corrected image, and determining, based on the second optical flow information, second spatial location compensation of the second noise-reduced image relative to the primary corrected image;
calculating third optical flow information between the third noise-reduced image and the primary corrected image, and determining, based on the third optical flow information, third spatial location compensation of the third noise-reduced image relative to the primary corrected image; and
performing image fusion on the second noise-reduced image, the third noise-reduced image, and the primary corrected image based on the second spatial location compensation and the third spatial location compensation, to obtain the secondary corrected image.

In a possible implementation of the first aspect, the electronic device includes at least two camera modules.
The obtaining a first image based on a first exposure parameter, obtaining a second image group based on a second exposure parameter, and obtaining, through an event sensor, event data corresponding to the first image, in response to a photographing instruction received when an electronic device is in a moving state includes:

obtaining the first image through a first camera module based on the first exposure parameter, and obtaining the event data through the event sensor; and
when the first image is obtained, obtaining the second image group through a second camera module based on the second exposure parameter.

In a possible implementation of the first aspect, the performing image fusion on the second image group and the primary corrected image to generate a secondary corrected image includes:

using, as a fourth reference image corresponding to the first image, a second image that is in the second image group and for which a time difference between second photographing time of the second image and first photographing time of the first image is the smallest;

performing multi-frame fusion noise reduction on the fourth reference image based on all the second images in the second image group, to obtain a fourth noise-reduced image; and

generating the secondary corrected image based on the fourth noise-reduced image and the primary corrected image.

In a possible implementation of the first aspect, the generating the secondary corrected image based on the fourth noise-reduced image and the primary corrected image includes:

calculating fourth optical flow information between the fourth noise-reduced image and the primary corrected image, and determining, based on the fourth optical flow information, fourth spatial location compensation of the fourth noise-reduced image relative to the primary corrected image; and

performing, based on the fourth spatial location compensation, image fusion on the fourth noise-reduced image and the primary corrected image to obtain the secondary corrected image.

In a possible implementation of the first aspect, after the deblurring the first image based on the event data to generate a primary corrected image, the method further includes:
displaying the primary corrected image on a preview interface.

After the performing image fusion on the second image group and the primary corrected image to generate a secondary corrected image, the method further includes:
storing the secondary corrected image in a gallery.

In a possible implementation of the first aspect, after the performing image fusion on the second image group and the primary corrected image to generate a secondary corrected image, the method further includes: displaying the secondary corrected image on a preview interface, and storing the secondary corrected image in a gallery.

In a possible implementation of the first aspect, before the obtaining a first image based on a first exposure parameter, obtaining a second image group based on a second exposure parameter, and obtaining, through an event sensor, event data corresponding to the first image, in response to a photographing instruction received when an electronic device is in a moving state, the method further includes:

receiving the photographing instruction initiated by a user, and determining photographing environment information of the electronic device; and

if it is detected, through a motion sensor, that the electronic device is in the moving state, determining the second exposure parameter based on a motion parameter obtained by the motion sensor, and determining the first exposure parameter based on the photographing environment information.

In a possible implementation of the first aspect, the first exposure parameter includes first exposure duration and a first exposure gain, and the second exposure parameter includes second exposure duration and a second exposure gain.

The first exposure duration is greater than the second exposure duration.

The first exposure gain is less than or equal to the second exposure gain.

According to a second aspect, an embodiment of this application provides an image processing apparatus, including:

an image capturing unit, configured to: obtain a first image based on a first exposure parameter, obtain a second image group based on a second exposure parameter, and obtain, through an event sensor, event data corresponding to the first image, in response to a photographing instruction received when an electronic device is in a moving state, where the second exposure parameter is determined based on the moving state, and the second image group includes at least one second image;

a deblurring unit, configured to deblur the first image based on the event data to generate a primary corrected image; and

an image fusion unit, configured to perform image fusion on the second image group and the primary corrected image to generate a secondary corrected image.

In a possible implementation of the second aspect, the image capturing unit is specifically configured to:

before the first image is obtained, obtain the second image group based on the second exposure parameter;

or

after the first image is obtained, obtain the second image group based on the second exposure parameter.

In a possible implementation of the second aspect, the image fusion unit includes:

a first reference image determining unit, configured to use, as a first reference image corresponding to the first image, a second image that is in the second image group and for which a time difference between second photographing time of the second image and first photographing time of the first image is the smallest;

a first noise reduction processing unit, configured to perform multi-frame fusion noise reduction on the first reference image based on all the second images in the second image group, to obtain a first noise-reduced image;

a first compensation unit, configured to: calculate first optical flow information between the first noise-reduced image and the primary corrected image, and determine, based on the first optical flow information, first spatial location compensation of the first noise-reduced image relative to the primary corrected image; and

a first fusion unit, configured to perform, based on the first spatial location compensation, image fusion on the first noise-reduced image and the primary corrected image to obtain the secondary corrected image.

In a possible implementation of the second aspect, the second image group includes a third image group and a fourth image group, and the image capturing unit includes:

a first capturing unit, configured to: before the first image is obtained, obtain the third image group based on the second exposure parameter; and

a second capturing unit, configured to: after the first image is obtained, obtain the fourth image group based on the second exposure parameter.

In a possible implementation of the second aspect, the image fusion unit includes:

a second reference image determining unit, configured to: use, as a second reference image corresponding to the first image, a second image that is in the third image group and for which a time difference between third photographing time of the second image and first photographing time of the first image is the smallest; and use, as a third reference image corresponding to the first image, a second image that is in the fourth image group and for which a time difference between fourth photographing time of the second image and the first photographing time of the first image is the smallest;

a second noise reduction processing unit, configured to: perform multi-frame fusion noise reduction on the second reference image based on all second images in the third image group to obtain a second noise-reduced image, and perform multi-frame fusion noise reduction on the third reference image based on all second images in the fourth image group to obtain a third noise-reduced image;

a second compensation unit, configured to: calculate second optical flow information between the second noise-reduced image and the primary corrected image, and determine, based on the second optical flow information, second spatial location compensation of the second noise-reduced image relative to the primary corrected image;

a third compensation unit, configured to: calculate third optical flow information between the third noise-reduced image and the primary corrected image, and determine, based on the third optical flow information, third spatial location compensation of the third noise-reduced image relative to the primary corrected image; and

a second fusion unit, configured to perform image fusion on the second noise-reduced image, the third noise-reduced image, and the primary corrected image based on the second spatial location compensation and the third spatial location compensation, to obtain the secondary corrected image.

In a possible implementation of the second aspect, the electronic device includes at least two camera modules.

The image capturing unit includes:

a third capturing unit, configured to: obtain the first image through a first camera module based on the first exposure parameter, and obtain the event data through the event sensor; and

a fourth capturing unit, configured to: when the first image is obtained, obtain the second image group through a second camera module based on the second exposure parameter.

In a possible implementation of the second aspect, the image fusion unit includes:

a fourth reference image determining unit, configured to use, as a fourth reference image corresponding to the first image, a second image that is in the second image group and for which a time difference between second photographing time of the second image and first photographing time of the first image is the smallest;

a fourth noise reduction processing unit, configured to perform multi-frame fusion noise reduction on the fourth reference image based on all the second images in the second image group, to obtain a fourth noise-reduced image; and

a third fusion unit, configured to generate the secondary corrected image based on the fourth noise-reduced image and the primary corrected image.

In a possible implementation of the second aspect, the third fusion unit includes:

a fourth compensation unit, configured to: calculate fourth optical flow information between the fourth noise-reduced image and the primary corrected image, and determine, based on the fourth optical flow information, fourth spatial location compensation of the fourth noise-reduced image relative to the primary corrected image; and

a fourth fusion unit, configured to perform, based on the fourth spatial location compensation, image fusion on the fourth noise-reduced image and the primary corrected image to obtain the secondary corrected image.

In a possible implementation of the second aspect, the apparatus further includes:

a first preview unit, configured to display the primary corrected image on a preview interface; and
a first storage unit, configured to store the secondary corrected image in a gallery.

In a possible implementation of the second aspect, the apparatus further includes:
a second preview unit, configured to: display the secondary corrected image on a preview interface, and store the secondary corrected image in a gallery.

In a possible implementation of the second aspect, the image capturing unit further includes:

a photographing instruction receiving unit, configured to: receive the photographing instruction initiated by a user, and determine photographing environment information of the electronic device; and
a motion determining unit, configured to: if it is detected, through a motion sensor, that the electronic device is in the moving state, determine the second exposure parameter based on a motion parameter obtained by the motion sensor, and determine the first exposure parameter based on the photographing environment information.

In a possible implementation of the second aspect, the first exposure parameter includes first exposure duration and a first exposure gain, and the second exposure parameter includes second exposure duration and a second exposure gain.

The first exposure duration is greater than the second exposure duration.

The first exposure gain is less than or equal to the second exposure gain.

According to a third aspect, an embodiment of this application provides an electronic device, including: a memory, a processor, and a computer program that is stored in the memory and that is executable on the processor. When the processor executes the computer program, the image processing method according to any one of the possible implementations of the first aspect is implemented.

According to a fourth aspect, an embodiment of this application provides a computer-readable storage medium. The computer-readable storage medium stores a computer program, and when the computer program is executed by a processor, the image processing method according to any one of the possible implementations of the first aspect is implemented.

According to a fifth aspect, an embodiment of this application provides a computer program product. When the computer program product runs on an electronic device, the electronic device is enabled to perform the image processing method according to any one of the possible implementations of the first aspect.

According to a sixth aspect, an embodiment of this application provides a chip system, including a processor. The processor is coupled to a memory, and the processor executes a computer program stored in the memory, to implement the image processing method according to any one of the possible implementations of the first aspect.

It may be understood that, for beneficial effects of the second aspect to the sixth aspect, refer to related descriptions in the first aspect. Details are not described herein again.

**BRIEF DESCRIPTION OF DRAWINGS**

FIG. 1 is a diagram of a structure of an electronic device according to an embodiment of this application;
FIG. 2 is a block diagram of a software structure of an electronic device according to an embodiment of this application;
FIG. 3 is a diagram of an existing photographing principle;
FIG. 4 is a diagram of an existing optical defocus;
FIG. 5 is an implementation flowchart of an image processing method according to an embodiment of this application;
FIG. 6(a) and FIG. 6(b) are a diagram of initiating a photographing instruction according to an embodiment of this application;
FIG. 7 is a diagram of comparison between a first image and event data according to an embodiment of this application;
FIG. 8(a) to FIG. 8(c) are a diagram of processing of a photographing interface according to an embodiment of this application;
FIG. 9(a) and FIG. 9(b) are a diagram of comparison between a preview image and an album gallery according to an embodiment of this application;
FIG. 10 is a diagram of a structure of a camera assembly according to an embodiment of this application;
FIG. 11A and FIG. 11B are an implementation flowchart of an image processing method according to another embodiment of this application;
FIG. 12A and FIG. 12B are an implementation flowchart of an image processing method according to another embodiment of this application;

FIG. 13 is a diagram of a structure of a camera assembly according to another embodiment of this application;

FIG. 14A and FIG. 14B are an implementation flowchart of an image processing method according to another embodiment of this application;

FIG. 15 is a block diagram of a structure of an image processing apparatus according to an embodiment of this application; and

FIG. 16 is a block diagram of a structure of an electronic device according to an embodiment of this application.

## DESCRIPTION OF EMBODIMENTS

In the following descriptions, for illustration instead of limitation, specific details such as a particular system structure and a technology are provided to make a thorough understanding of embodiments of this application. However, a person skilled in the art should understand that this application may also be implemented in other embodiments without these specific details. In other cases, detailed descriptions of well-known systems, apparatuses, circuits, and methods are omitted, so that this application is described without being obscured by unnecessary details.

It should be understood that, when being used in the specification of this application and the appended claims, the term "include" indicates the presence of the described features, wholes, steps, operations, elements, and/or components, but does not preclude the presence or addition of one or more other features, wholes, steps, operations, elements, components, and/or collections thereof.

It should also be understood that the term "and/or" as used in the specification of this application and the appended claims refers to any combination of one or more of associated items and all possible combinations, and includes such combinations.

As used in the specification of this application and the appended claims, the term "if" may be interpreted as "when" or "once" or "in response to determining" or "in response to detecting" depending on the context. Similarly, the phrase "if it is determined" or "if [a described condition or event] is detected" may be interpreted, depending on the context, to mean "once determined" or "in response to determining" or "once [the described condition or event] is detected" or "in response to detecting [the described condition or event]".

In addition, in the descriptions of the specification of this application and the appended claims, the terms "first", "second", "third", and the like are merely used for distinguishing descriptions, but cannot be understood as indicating or implying relative importance.

Reference to "one embodiment" or "some embodiments" described in the specification of this application means that one or more embodiments of this application include a specific feature, structure, or feature described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized.

An image processing method provided in embodiments of this application may be applied to an electronic device like a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). Particularly, the image processing method may be applied to an electronic scale or an electronic device having a body detection function. A specific type of the electronic device is not limited in embodiments of this application.

For example, the electronic device may be a station (STATION, ST) in a WLAN, or may be a cellular phone, a cordless phone, a session initiation protocol (Session Initiation Protocol, SIP) phone, or a wireless local loop (Wireless Local Loop, WLL) station, a personal digital assistant (Personal Digital Assistant, PDA) device, a handheld device having a wireless communication function, a computing device or another processing device connected to a wireless modem, a computer, a laptop computer, a handheld communication device, a handheld computing device, and/or another device for performing communication in a wireless system and a mobile terminal in a next-generation communication system, for example, a mobile terminal in a 5G network or a mobile terminal in a future evolved public land mobile network (Public Land Mobile Network, PLMN) network.

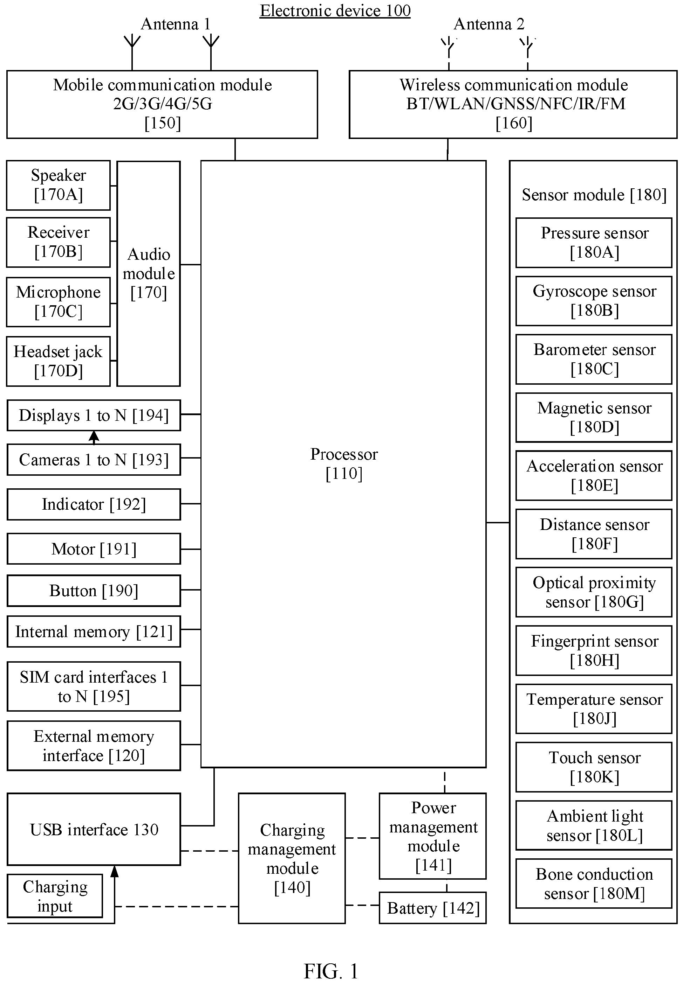

FIG. 1 is a diagram of a structure of an electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instruction or the data again, the processor may directly invoke the instruction or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used for audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a two-way communications bus, and converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral device like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured for a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be connected to the charger to charge the electronic device 100, or may be configured to transmit data between the electronic device 100 and a peripheral device, or may be connected to a headset for playing audio through the headset. The interface may be further connected to another electronic device like an AR device.

It may be understood that an interface connection relationship between the modules that is shown in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a quantity of battery cycles, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 150 may provide a wireless communication solution that is applied to the electronic device 100 and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium or highfrequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information. The display 194 may specifically display a generated detection report, so that a user can view the detection report through the display 194.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1. The display 194 may include a touch panel and another input device.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be used to connect to an external storage card, for example, a micro SD card, to extend a storage capability of the electronic device 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, and may further include a nonvolatile memory, for example, at least one magnetic disk storage device, a flash storage device, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be configured to listen to music or answer a hands-free call through the speaker 170A. Particularly, the speaker 170A may be configured to output prompt information, to notify the user of a part that needs to be in contact with an electronic scale.

The receiver 170B, also referred to as an "earpiece", is configured to convert an electrical audio signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending voice information, the user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. For example, the electronic device may obtain a weight of the user through the pressure sensor 180A. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on a Messaging application icon, an instruction for viewing an SMS message is performed. When a touch operation whose touch operation intensity is greater than or equal to the first pressure threshold is performed on the Messaging application icon, an instruction for creating a new SMS message is performed.

The gyroscope sensor 180B may be configured to determine a motion posture of the electronic device 100. In some embodiments, an angular velocity of the electronic device 100 around three axes (namely, axes x, y, and z) may be determined through the gyroscope sensor 180B. The gyroscope sensor 180B may be configured to perform image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover through the magnetic sensor 180D. In some embodiments, when the electronic device 100 is a clamshell phone, the electronic device 100 may detect opening and closing of a flip cover based on the magnetic sensor 180D. Further, a feature such as automatic unlocking upon opening of the flip cover is set based on a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, through the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust a white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 degrades performance of a processor near the temperature sensor 180J, to reduce power consumption and implement thermal protection. In some other embodiments, when the temperature is lower than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch device". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button or a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. The touch vibration feedback effect may be further user-defined.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In this embodiment of the present invention, an Android system of a layered architecture is used as an example to illustrate a software structure of the electronic device 100.

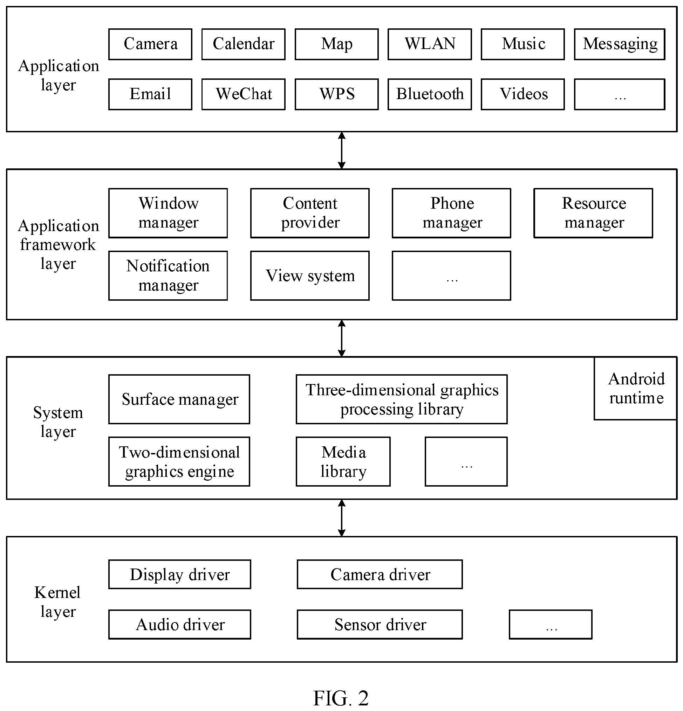

FIG. 2 is a block diagram of a software structure of an electronic device according to an embodiment of this application.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system layer, and a kernel layer from top to bottom.

The application layer may include a series of application packages.

As shown in FIG. 2, the application packages may include applications such as Camera, Calendar, Map, WLAN, Bluetooth, Music, Videos, Messaging, Email, WeChat, and WPS.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the electronic device, for example, management of a call status (including answering, declining, or the like).

The resource manager provides various resources such as a localized character string, an icon, an image, a layout file, and a video file for an application.

The notification manager enables an application to display notification information in the status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be called by a Java language and a kernel library of Android.

The application layer and the application framework layer run in the virtual machine. The virtual machine executes Java files of the application layer and the application framework layer as binary files. The virtual machine is configured to implement functions such as object lifecycle management, stack management, thread management, security and exception management, and garbage collection.

The system layer may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working process of software and hardware of the electronic device 100 with reference to a photographing scenario.

When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. An example in which the touch operation is a touch tap operation, and a control corresponding to the tap operation is a control of a camera application icon is used. The camera application invokes an interface at the application framework layer to start the camera application, then starts a camera driver by invoking the kernel layer, and captures a static image or a video through the camera 193.

Nowadays, with continuous development of device technologies and increasing photographing requirements of users, performance of a camera assembly configured on an electronic device like a smartphone is increasingly stronger, and imaging effects of some camera assemblies are even better than those of professional digital cameras. A hardware configuration of a built-in camera assembly of the electronic device is ungraded, to improve a resolution and color brightness of a photographed image. In addition, to enable the electronic device to be applicable to different photographing scenarios (for example, a night scenario and a motion scenario), a corresponding algorithm may be configured to optimize an image, to improve an imaging effect. An image blur is one of main factors that affect image photographing quality, and how to deblur the image becomes a focus of image optimization of the electronic device.

Causes of blurring of a photographed image may be roughly classified into two aspects.

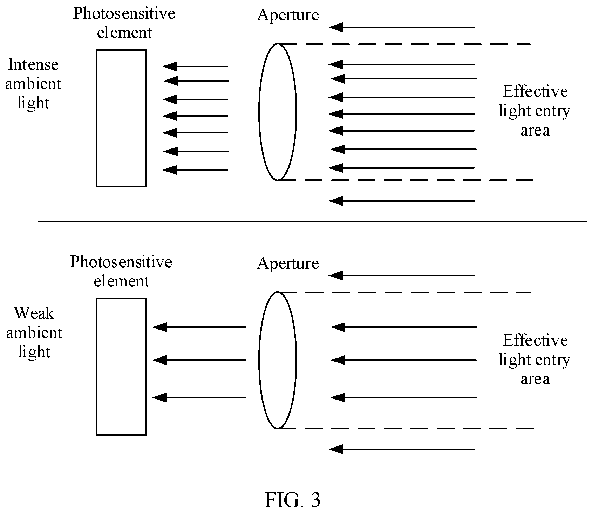

In a first aspect, a motion blur is caused by a relative motion between the electronic device and a photographed object. For example, a photographed target subject moves relative to the electronic device. In other words, the electronic device is static, but the photographed object moves. Alternatively, a photographing user holding the electronic device shakes. In other words, the electronic device moves, but the photographed object is static. When the electronic device photographs an image, corresponding photographing time varies with a shutter speed of the camera assembly. When the shutter speed is slow and a relative motion amplitude is large, a motion blur occurs on the photographed image. For example, FIG. 3 is a diagram of an existing photographing principle. As shown in FIG. 3, to ensure visibility of each photographed object in an image, an amount of light entering the camera assembly needs to be within a fixed range during image photographing. When ambient light intensity is intense or an aperture of the camera assembly is large, because an amount of entered light per unit time is large, duration required for photographing is short, that is, a shutter speed is fast. In this case, a motion blur is not likely to occur. On the contrary, when the ambient light intensity is weak or the aperture of the camera assembly is small, because the amount of entered light per unit time is small, to ensure that the amount of entered light is within a preset range, duration required for photographing is long. In this case, when the photographed object moves violently relative to the electronic device, a motion blur occurs during photographing.

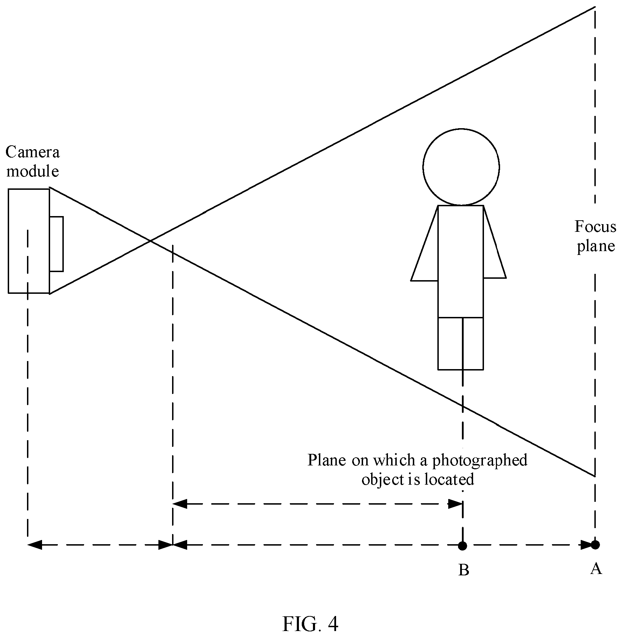

In a second aspect, a defocus blur is caused by a defocus of an optical system in the camera assembly of the electronic device. For example, FIG. 4 is a diagram of an existing optical defocus. As shown in FIG. 4, a focus of the optical system of the electronic device is on a plane on which a point A is located, and a photographed object is on a plane on which a point B is located. In this case, the focus of the optical system is not aligned with the photographing plane on which the photographed object is located. In this case, a photographed photo is defocused and blurry.

In the past long time, a lot of research work has been carried out in the field of computer vision to remove an image blur caused by a relative motion in an image, so as to explore an accurate and efficient method for image deblurring. In the conventional technology, image deblurring is classified into the following manners based on a mode type of input data.

Manner 1: Deblurring is implemented based on a single frame of image. In this manner, the single frame of image may be deblurred by using a single blur kernel or an end-to-end neural network. However, when a blur is large, a distortion degree of the single frame of image is high, an effect of deblurring by using the blur kernel or the neural network is still not ideal, a loss of edge information still cannot be repaired, and imaging quality cannot meet a photographing requirement of a user.

Manner 2: Deblurring is implemented based on multi-frame image fusion. In this manner, a plurality of frames of images are obtained by the electronic device. The plurality of frames of images may be continuously exposed images captured in a time sequence by using a binocular system, a spectroscope system, or a single camera. However, because a time sequence deviation exists in the plurality of frames of images obtained in this manner, a spatial displacement exists between the frames of images. When the plurality of frames of images are fused, the spatial displacement also affects an image fusion effect. In addition, because photographing time corresponding to each frame of image is short, that is, an overall amount of entered light is low, each frame of image has problems such as a low contrast and underexposure, and an overall imaging effect of the image is reduced. Even if the plurality of frames of images are fused, a color distortion problem still exists.

In conclusion, regardless of whether deblurring is implemented based on a single frame of image or based on a multi-frame-fused image, there is a disadvantage in an imaging effect. Therefore, deblurring cannot be performed well, image quality is low, an actual image photographing requirement of a user cannot be met, and photographing applicability in a motion scenario is low.

Embodiment 1

Therefore, to resolve a problem in an existing image processing technology that in a photographing scenario in a moving state, neither an imaging effect nor image blur reduction can be considered, this application provides an image processing method. The image processing method is performed by an electronic device. The electronic device includes but is not limited to an electronic device having a camera module, for example, a smartphone, a tablet computer, a digital camera, a motion camera, or a drone. In particular, the electronic device is specifically a smartphone, at least one camera assembly is installed in the smartphone, and a processor of the smartphone may deblur, according to a built-in algorithm, an image that is captured by the camera assembly in a moving state and that has a dynamic blur, to obtain a high-definition image, so as to resolve a problem that neither image blurring nor an image photographing instruction can be considered.

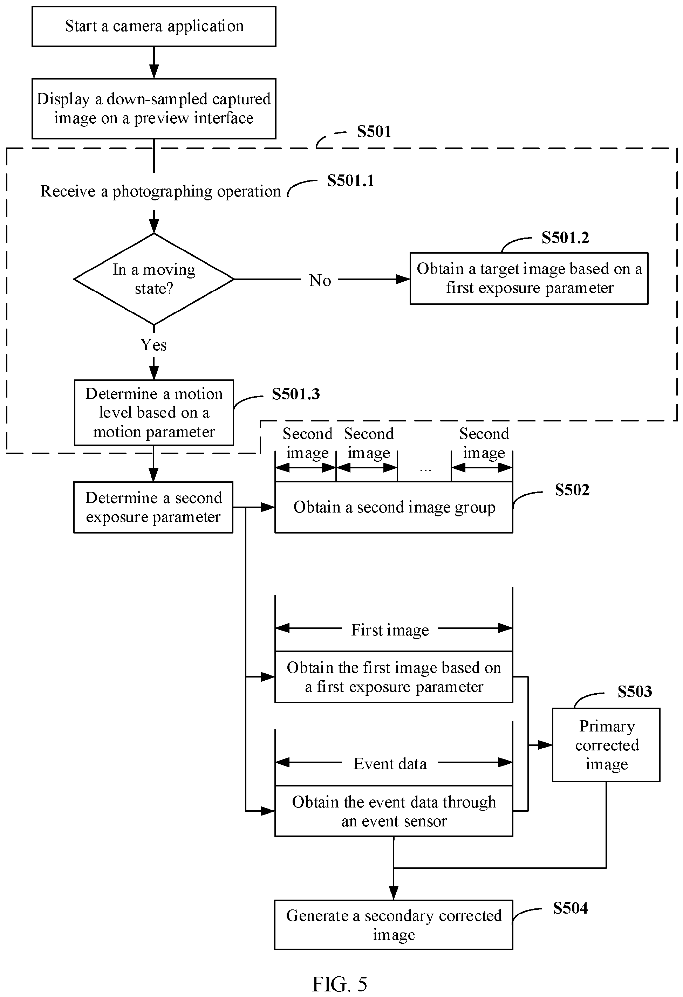

FIG. 5 is an implementation flowchart of an image processing method according to an embodiment of this application. Details are as follows.

In S501, a photographing operation initiated by a user is received, a photographing instruction is generated, and it is determined whether the electronic device is in a moving state.

In this embodiment, after starting a camera application, the electronic device obtains an image at a down-sampling frequency, and displays the image on a preview interface of the camera application.

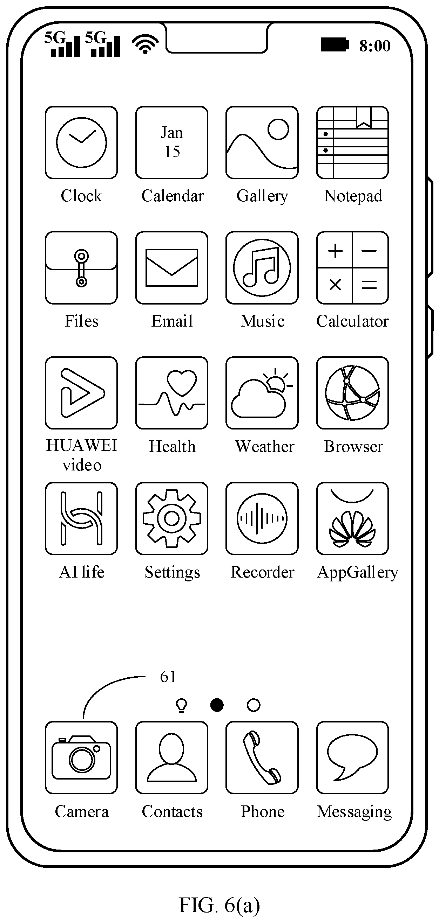

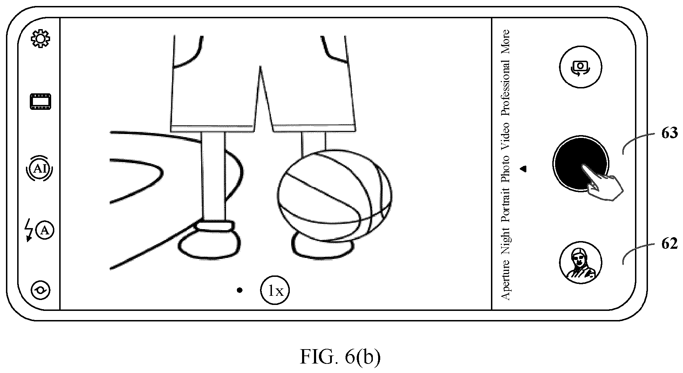

In this embodiment, a photographing application is configured and installed on the electronic device. The photographing application may be the camera application built in a system of the electronic device, or may be another third-party application that can invoke a camera assembly to complete photographing. For example, FIG. 6(a) and FIG. 6(b) are a diagram of initiating a photographing instruction according to an embodiment of this application. As shown in FIG. 6(a), program icons of a plurality of installed applications are displayed on a home screen of the electronic device, including a camera application 61 built in the system. The user may tap the camera application 61 to start a photographing function, to obtain a camera operation interface. As shown in FIG. 6(b), a preview area 62 and a photographing control 63 are displayed on the camera operation interface. After detecting that the camera application is started, the electronic device invokes the camera assembly to photograph a preview image at a preset sampling frequency, so that the user can adjust a photographing angle and a currently corresponding photographed object by using the preview area 62. After determining the photographing angle and determining a focused object, the user may tap the photographing control 63 to initiate a photographing operation, and generate the photographing instruction corresponding to the photographing operation.

In this embodiment, when receiving the photographing instruction, the electronic device may identify a motion status of the electronic device through a built-in motion sensor, to identify whether the electronic device is currently in the moving state. The motion sensor includes but is not limited to a gyroscope, an acceleration sensor, an angular velocity sensor, and the like. A corresponding motion determining threshold may be configured for the electronic device, and a motion parameter corresponding to a moment at which the photographing instruction is received is obtained through the motion sensor. If the motion parameter is greater than the motion determining threshold, it is identified that the electronic device is in the moving state. On the contrary, if the motion parameter is less than or equal to the motion determining threshold, it is identified that the electronic device is in a non-moving state.

In this embodiment, when the electronic device identifies that the electronic device is currently in the non-moving state, it indicates that a relative motion between the electronic device and the photographed object does not cause a motion blur on the image. In this case, the image may be captured based on an exposure parameter determined in a current illumination environment, and operations in S502 to S504 do not need to be performed. When the electronic device identifies that the electronic device is currently in the moving state, it indicates that a dynamic blur may occur. In this case, related operations in S502 to S504 need to be performed, to implement deblurring.

In a possible implementation, the motion determining threshold may be determined based on exposure duration (which may also be referred to as shutter time) that is estimated when the photographing instruction is received. The exposure duration that is estimated when the photographing instruction is received is related to light intensity and an aperture size. If the exposure duration is longer, the corresponding motion determining threshold is smaller. In other words, a small motion amplitude also causes a dynamic blur. Therefore, the corresponding motion determining threshold needs to be set to a smaller value, so that corresponding deblurring can be performed on the small motion amplitude. On the contrary, if the exposure duration is shorter, the corresponding motion determining threshold is larger. The motion determining threshold can be dynamically adjusted based on a current light intensity parameter and aperture size, so that adaptation between a deblurring operation and a scenario can be identified and improved, and an unnecessary deblurring operation can be reduced.

Further, in another embodiment of this application, S501 may specifically include the following steps.

In S501.1, the photographing instruction initiated by the user is received, and photographing environment information of the electronic device is determined.

In S501.2, if it is detected, through the motion sensor, that the electronic device is in the non-moving state, a first exposure parameter is determined based on the photographing environment information, a target image is obtained based on the first exposure parameter, and the target image is stored.

In this embodiment, when receiving the photographing instruction, the electronic device may obtain the photographing environment information, and determine a corresponding motion determining threshold based on the photographing environment information. When it is detected, through the motion sensor, that a current motion parameter is greater than the motion determining threshold, it is identified that the electronic device is in the moving state, and operations in S501.3 are performed. On the contrary, if the motion parameter is less than the motion determining threshold, it is identified that the electronic device is in the non-moving state. In this case, the first exposure parameter may be determined based on the photographing environment information, the target image is obtained based on the first exposure parameter, and the target image is stored without being deblurred.

In S501.3, if it is detected, through the motion sensor, that the electronic device is in the moving state, a second exposure parameter is determined based on the motion parameter obtained by the motion sensor, and the first exposure parameter is determined based on the photographing environment information.

In this embodiment, when determining that the electronic device is currently in the moving state, the electronic device needs to determine two different exposure parameters, to obtain a long-frame image (namely, a first image) and a short-frame image (namely, a second image) that is used for deblurring. The first exposure parameter corresponding to the first image is related to current photographing environment information, and the photographing environment information includes light intensity, a type of a photographed object (for example, a plant or a person), an aperture size, a focus, and the like. The second exposure parameter is related to the moving state, and therefore is determined based on the motion parameter.

In a possible implementation, the electronic device may convert the motion parameter into a corresponding motion level, and different motion levels correspond to associated exposure parameters. In other words, the electronic device stores a correspondence table between a motion level and an exposure parameter, and the correspondence table may further record a parameter range corresponding to each motion level. When detecting that the electronic device is currently in the moving state, the electronic device may identify a parameter range corresponding to the motion parameter, determine, based on the parameter range, a motion level currently corresponding to the electronic device, determine, by querying the correspondence table, an exposure parameter associated with the motion level, and determine the exposure parameter as the second exposure parameter.

In this embodiment of this application, the first exposure parameter is determined based on the photographing environment information, and the second exposure parameter is determined based on the motion parameter, so that accuracy of the exposure parameter can be improved, to improve a subsequent imaging effect.

In S502, in response to the photographing instruction received when the electronic device is in the moving state, the first image is obtained based on the first exposure parameter, a second image group is obtained based on the second exposure parameter, and event data corresponding to the first image is obtained through an event sensor, where the second exposure parameter is determined based on the moving state, the second image group includes at least one second image, and the second image has a higher definition than the first image.

In this embodiment, when detecting that the electronic device is in the moving state, the electronic device captures two different types of images based on two different exposure parameters. The exposure parameter may specifically include one or a combination of exposure duration and an exposure gain. Generally, the first exposure parameter may be a default exposure parameter determined based on the photographing environment information (such as the light intensity and a default aperture size) of the electronic device, and the second exposure parameter is an exposure parameter that matches the electronic device in the moving state, namely, an exposure parameter that corresponds to a motion level and that is determined based on the motion level. It should be noted that, because the first exposure parameter is determined based on an environment, that is, the first image captured based on the first exposure parameter has a large dynamic blur, and the second exposure parameter is an exposure parameter that matches the moving state, that is, a dynamic blur is small, definitions corresponding to the images finally captured based on the two different exposure parameters are different, and a definition of the second image is higher than a definition of the first image. Therefore, the first image and the second image are fused, to implement deblurring.

In a possible implementation, the first exposure parameter includes first exposure duration and a first exposure gain, and the second exposure parameter includes second exposure duration and a second exposure gain. The first exposure duration is greater than the second exposure duration, and the first exposure gain is less than or equal to the second exposure gain. The second exposure parameter matches the moving state, and the first exposure parameter is determined based on the photographing environment. Therefore, to obtain a clear image, photographing duration of the second image captured based on the second exposure parameter is less than that of the first image captured based on the first exposure parameter. In other words, the first exposure duration is greater than the second exposure duration. In addition, increasing an exposure gain (that is, intensifying ambient light) may also shorten shutter duration (when the aperture size is fixed, more intense ambient light indicates shorter corresponding shutter duration, and therefore, duration required for photographing may be shortened by increasing the exposure gain, that is, increasing ambient light intensity). Therefore, the first exposure gain is not greater than the second exposure gain, and the second exposure gain may be greater than the first exposure gain.

It should be noted that a manner of increasing the exposure gain may be a manner of turning on a flash or increasing brightness of the flash or another manner to increase the exposure gain. For example, when the first image is captured based on the first exposure parameter, the electronic device does not turn on the flash for photographing; and when the second image is captured based on the second exposure parameter, the electronic device turns on the flash, so that the first exposure gain is less than the second exposure gain.

In this embodiment, because the second exposure duration is less than the first exposure duration, an image captured based on the second exposure duration usually has a small amount of entered light, that is, the second image usually has much noise. To improve subsequent image quality, there are a plurality of second images in the second image group, so that noise in the images can be reduced through fusion of a plurality of frames of images.

In this embodiment of this application, the first exposure parameter and the second exposure parameter that have different exposure duration and exposure gains are set, so that an image blur can be removed, and it can be ensured that chroma of an entire picture is within an appropriate range. This improves an overall imaging effect. In addition, when image capturing is performed based on the first exposure parameter, some areas may be overexposed. The second image captured based on the second exposure parameter can compensate for the overexposed areas, to ensure imaging quality of the entire image.

It should be noted that the first image and the second image may be color images captured based on three primary colors: red, green, and blue, namely, RGB.

In this embodiment, in addition to the camera assembly that is based on RGB capturing, the electronic device is further configured with the event sensor, which may also be referred to as an event (event) camera. The event camera is specifically greatly different from a conventional RGB camera. Compared with the conventional camera that captures an image at a fixed frequency, the event camera outputs a signal (including symbols of an event, a location, and a brightness change) by measuring a brightness change of each pixel, that is, is configured to record change information of each pixel. The change information of each pixel forms the event data. The signal output by the event camera may be a synchronous signal or an asynchronous signal. A specific selected signal type may be determined based on factors such as performance of the electronic device, a hardware configuration, and a photographing scenario. This is not limited herein. When obtaining color images (namely, the first image and the second image group) through the RGB camera, the electronic device obtains, through the event sensor (namely, the event camera), event data corresponding to photographing of the color images, to record a change of each pixel in the photographing process, for subsequent deblurring.

In a possible implementation, in addition to collecting corresponding event data when the first image is obtained, the event camera may also obtain corresponding event data when the second image group is captured, and in a subsequent process of performing noise reduction and fusion on a plurality of short-frame images (namely, the second images in the second image group), the event data may be further used for deblurring, to improve quality of a fused image.

In S503, the first image is deblurred based on the event data, to generate a primary corrected image.

In this embodiment, after obtaining the foregoing three types of data (namely, the first image, the second image group, and the event data), the electronic device may remove the dynamic blur. A processing process is divided into two phases. A first phase is a deblurring phase based on the first image and the event data. A second phase is a deblurring phase of long and short frames based on an image on which deblurring is performed once and the second image group.

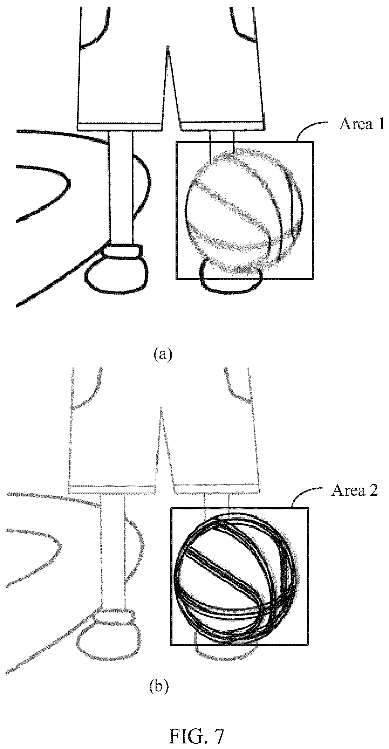

In this embodiment, because the event data records a change of each pixel in the process of photographing the first image, the first image may be deblurred based on the change of each pixel, to obtain the primary corrected image. For example, FIG. 7 is a diagram of comparison between the first image and the event data according to an embodiment of this application. (a) in FIG. 7 shows the first image (namely, a long-frame image obtained through long exposure) captured based on the first exposure parameter, and (b) in FIG. 7 shows the event data obtained through the event sensor. Through comparison between images in two areas, an area with a strong motion (namely, an area with a large dynamic blur), for example, an area 1, may be determined. Correspondingly, corresponding change information is recorded by using corresponding pixel values in a same area in the event data, for example, an area 2. Based on this, the electronic device may adjust a corresponding pixel in the first image based on the change information of each pixel in the event data, to implement deblurring, so as to obtain the primary corrected image.

In S504, image fusion is performed on the second image group and the primary corrected image, to generate a secondary corrected image.

In this embodiment, in addition to deblurring the first image based on the event data, the electronic device may further perform, by using the second image group with a higher definition, secondary deblurring on the primary corrected image obtained based on the first image. Because the second image (namely, the short-frame image) in the second image group has a higher definition, that is, boundary information of the photographed object is complete, the electronic device may fuse the second image group and the primary corrected image, so that the secondary deblurring operation on the primary corrected image can be implemented.

In a possible implementation, the electronic device may identify an area with a dynamic blur in the primary corrected image (because the event data records the change information of each pixel, an area including pixels whose change values are greater than a preset threshold may be identified as the area with the dynamic blur), obtain boundary information of the dynamically changed area from the second image group, and correct, based on the boundary information, a pixel in the corresponding area in the primary corrected image, to generate the secondary corrected image.

The electronic device has two image output manners, which are specifically as follows:

Manner 1: A final processed image, namely, the secondary corrected image, is directly displayed on a preview interface. To be specific, the secondary corrected image is displayed on the preview interface, and the secondary corrected image is stored in a gallery.

In this embodiment, to help the user determine an imaging effect of a final photographed image, and avoid missing a photographing occasion because the final output image does not meet an expectation, the electronic device may display, on the preview interface, the secondary corrected image obtained after two times of deblurring, so that the user can determine, after determining a final dynamic blur degree of the photographed image, whether to perform photographing again.

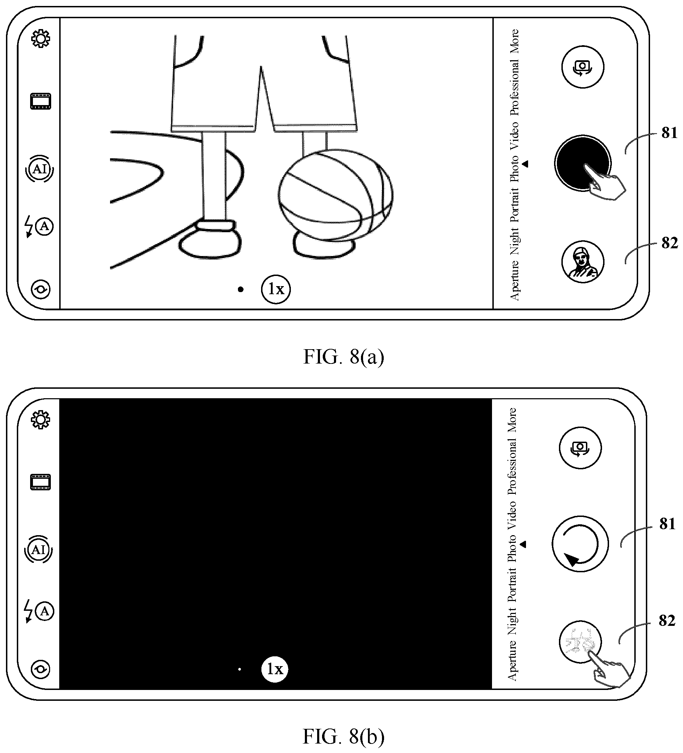

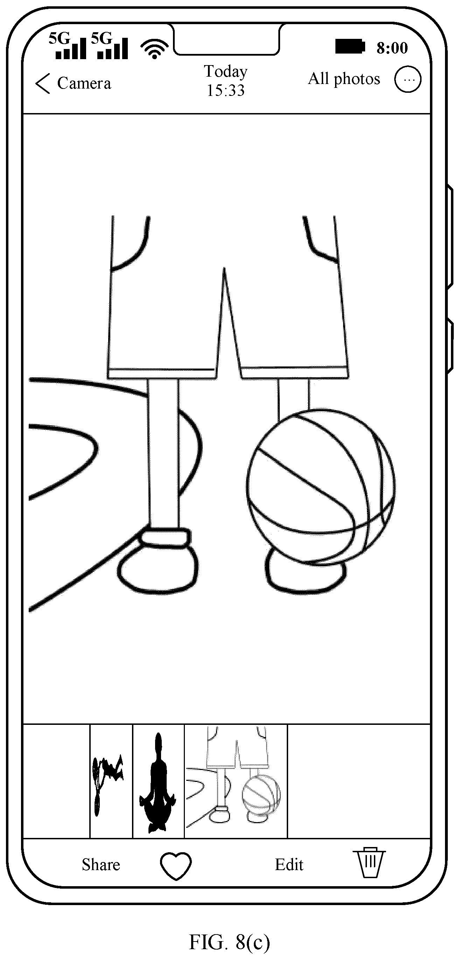

For example, FIG. 8(a) to FIG. 8(c) are a diagram of processing of a photographing interface according to an embodiment of this application. As shown in FIG. 8(a), after the user taps the photographing control in the camera application of the electronic device, for example, after a photographing control 81 in FIG. 8(a) is tapped, the shutter is simulated in a preview area of the electronic device, that is, a transient black screen occurs. In this case, the electronic device obtains the first image and the second image group, obtains the event data through the event sensor, and performs processing based on the three types of data. In this case, because image processing requires specific processing time, and to prompt the user that the electronic device is processing an image, the photographing control 81 is in a waiting state, as shown in FIG. 8(b). In this case, because the electronic device is still responding to a previous photographing task, a next photographing operation cannot be performed, and therefore the user cannot initiate a photographing operation. The preview interface may remain in a black screen state, or may continue to a real-time image collected by the camera assembly. In this case, the user taps an image preview control 82, to enter an image preview interface. As shown in FIG. 8(c), the electronic device may display the finally generated secondary corrected image on the preview interface.

In this embodiment of this application, the secondary corrected image is directly displayed on the preview interface, so that the user can determine the imaging effect of the final image, and determine, based on a situation, whether to perform photographing again, to avoid missing a photographing occasion.

Manner 2: The primary corrected image instead of a final processed image is displayed on a preview interface. Specifically, the primary corrected image is displayed on the preview interface, and the secondary corrected image is stored in a gallery.

In this embodiment, the electronic device may perform phase-based display. In a first phase, the user uses the preview interface of the camera application. To reduce waiting time of the user, after the primary corrected image is generated, the primary corrected image may be displayed on the preview interface. In a process of viewing the primary corrected image on the preview interface by the user, the electronic device may continue to fuse the second image group and the primary corrected image, and store the finally generated secondary corrected image in the gallery.

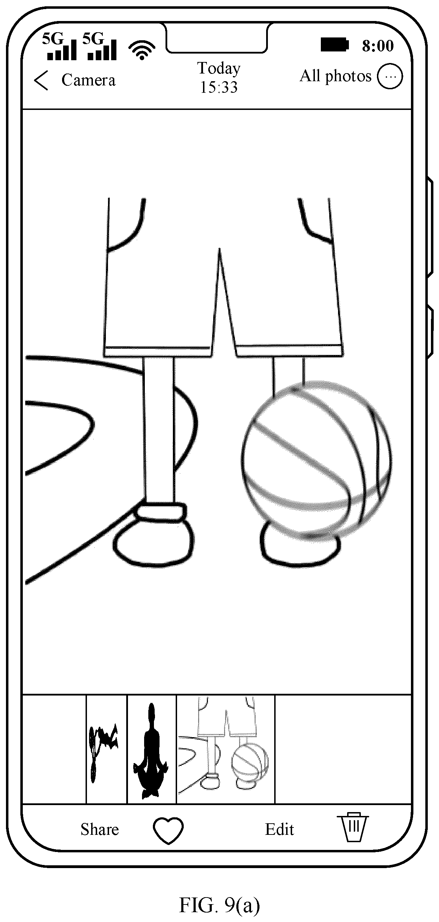

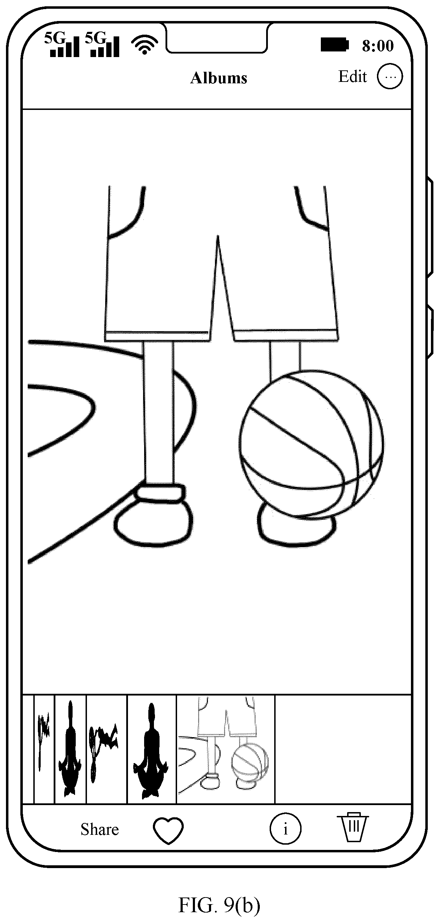

For example, FIG. 9(a) and FIG. 9(b) are a diagram of comparison between a preview image and an album gallery according to an embodiment of this application. Similar to that in the embodiment shown in FIG. 8(a) to FIG. 8(c), after photographing, the user may tap the image preview control 82, to enter an image preview interface. In this case, a preview interface shown in FIG. 9(a) is displayed. The primary corrected image processed based on the first image and the event data is displayed on the preview interface. It can be learned from FIG. 9(a) that some areas are still dynamic blurry. The user may enter the gallery of the electronic device through an album application on the home screen. The gallery stores all images stored in the electronic device. As shown in FIG. 9(b), because there is usually a long operation gap for switching from the used camera application to the album application by the user, after generating the primary corrected image, the electronic device may continue to fuse the primary corrected image and the second image group, to obtain the secondary corrected image, and store the secondary corrected image in the gallery. In other words, an image viewed by the user in the gallery is an image obtained through secondary processing. If the secondary corrected image needs to be displayed on the preview interface, when the user enters the preview interface, the electronic device may still be in the processing process. In this case, the user cannot immediately view the image, and the secondary corrected image can be displayed on the preview image only after specific waiting time. Consequently, a next photographing operation of the user is affected, and smoothness of a photographing process is affected. Therefore, in the phase-based display manner, the primary corrected image with a fast response may be displayed on the preview interface, and the secondary corrected image is stored in the gallery, to reduce waiting time of the user.

In a possible implementation, in the process of viewing the preview interface, if the secondary corrected image has been generated, the user may dynamically switch the primary corrected image to the secondary corrected image on the preview interface, for example, dynamically update, in a mosaic or dynamic blur manner, a pixel area with a difference. In this way, the user can still view and obtain the finally processed image (namely, the secondary corrected image) in real time in a scenario in which the user stays on the preview interface for a long time.

It can be learned from the foregoing descriptions that, according to the image processing method provided in this embodiment of this application, when it is detected that the photographing instruction is initiated in the moving state, the first image and the second image group are obtained based on different exposure parameters, and the event data corresponding to the first image is obtained when the foregoing two types of images are obtained. Because the event data records dynamic change information of a photographed object in the moving state, the first image may be deblurred based on the event data, to obtain the primary corrected image. In addition, the exposure parameter used for the second image group is inconsistent with the exposure parameter used when the first image is captured. Compared with the first image, a first image in the second image group has higher definition. Therefore, the second image group and the primary corrected image can further reduce a blur effect caused by relative motion, and finally the secondary corrected image is generated, to eliminate an image blur caused by relative motion. Compared with an existing image processing technology, this application does not simply shorten exposure duration to obtain a high-definition image, but improves an image definition by performing a double deblurring operation. First, the event data in the photographing process is obtained, and the first image is optimized once to obtain the primary corrected image. Then, image fusion is performed by using the high-definition second image group to further eliminate the blur caused by the relative motion and obtain the secondary corrected image. This ensures imaging quality of an image and improves a definition of the output image while the image blur is removed.

Embodiment 2

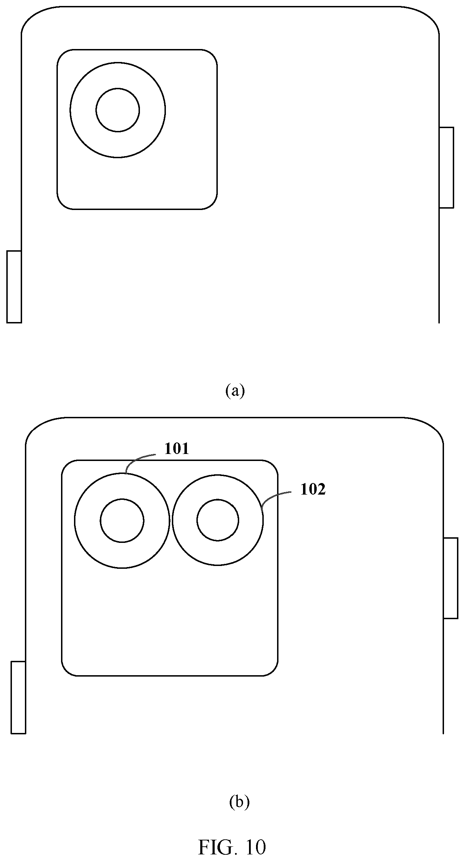

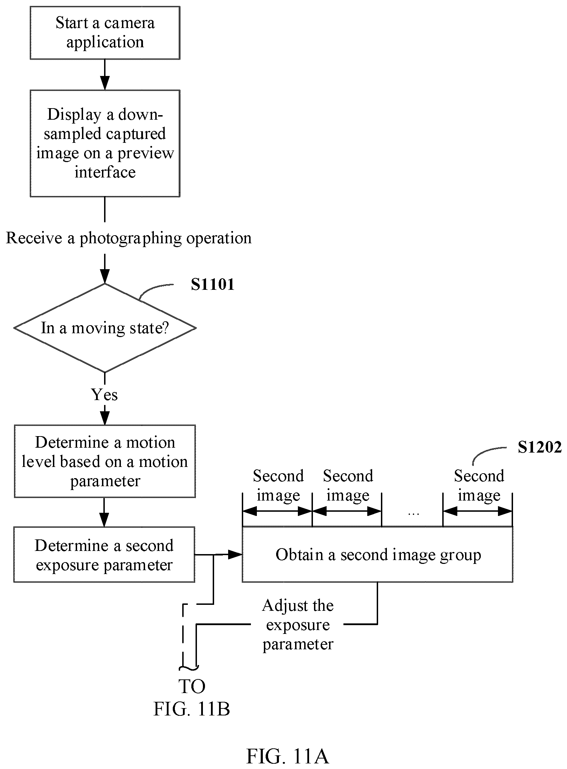

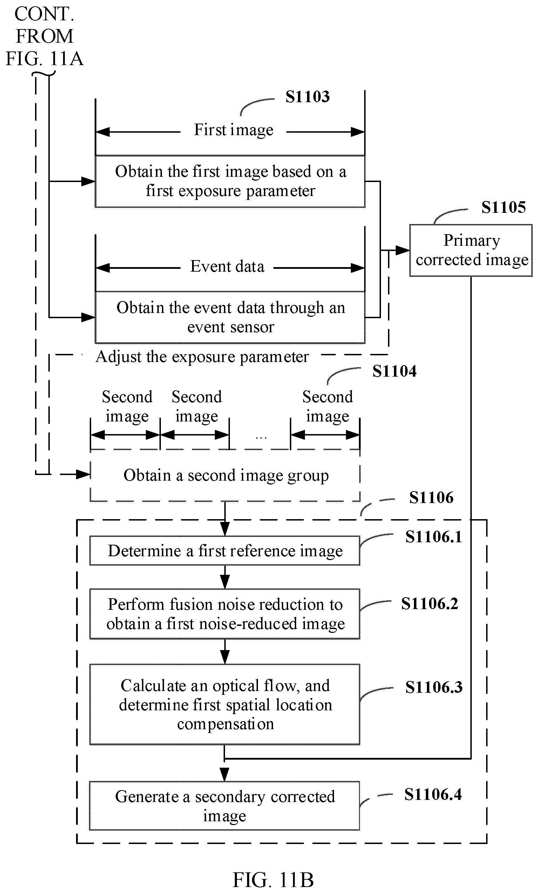

Compared with the electronic device in which a structure of the camera assembly is not limited in Embodiment 1, an electronic device in Embodiment 2 has a camera assembly that specifically includes one camera module and one event sensor. For example, FIG. 10 is a diagram of a structure of the camera assembly according to an embodiment of this application. As shown in (a) in FIG. 10, the camera assembly includes one camera module, and the camera module is a camera module that can record event data. In this case, the camera module is integrated with the event sensor, and the electronic device may obtain RGB images (namely, a first image and a second image) and event data through the camera module. As shown in (b) in FIG. 10, the camera assembly includes a camera module 101 configured to capture an RGB image and a camera module 102 integrated with the event sensor. The first image and the second image may be obtained through the camera module 101, and the event data may be obtained through the camera module 102. Specifically, when there is only one camera module configured to obtain an RGB image in the camera assembly, the electronic device needs to obtain the first image and a second image group in a time division manner. In Embodiment 2, the second image group may be obtained before the first image, or may be obtained after the first image. FIG. 11A and FIG. 11B are an implementation flowchart of an image processing method according to another embodiment of this application. As shown in FIG. 11A and FIG. 11B, the image processing method provided in this embodiment specifically includes the following steps.

In S1101, a photographing operation initiated by a user is received, a photographing instruction is generated, and it is determined whether the electronic device is in a moving state.

Because an implementation process of S1101 is completely the same as an implementation process of S501, for specific descriptions, refer to related descriptions of S501. Details are not described herein again.

In S1102, in response to the photographing instruction received when the electronic device is in the moving state, the second image group is obtained based on a second exposure parameter.

In S1103, in response to the photographing instruction received when the electronic device is in the moving state, the first image is obtained based on a first exposure parameter, and event data corresponding to the first image is obtained through the event sensor.

In this embodiment, the electronic device may obtain the second image group before obtaining the first image. The electronic device may first adjust an exposure parameter to the second exposure parameter, and obtain a plurality of second images through the camera module based on the second exposure parameter, to generate the second image group. Then, the electronic device may adjust the exposure parameter from the second exposure parameter to the first exposure parameter based on photographing environment information, and capture the first image through the camera module based on the first exposure parameter. In the image obtaining process, event data may be continuously obtained through a time sensor.

In S1104, after the first image is obtained, the second image group is obtained based on a second exposure parameter.

In this embodiment, similar to S1102, if the electronic device does not obtain the second image group before the first image, the electronic device may obtain the second image group after obtaining the first image. In other words, after determining the first exposure parameter based on the photographing environment information, the electronic device obtains the first image based on the first exposure parameter, determines the second exposure parameter based on a motion level corresponding to the moving state, changes the first exposure parameter to the second exposure parameter, and then obtains the second image group based on the second exposure parameter.

It should be noted that, in this embodiment, only one second image group is obtained, that is, the second image group is obtained before the first image, or obtained after the first image group. Therefore, in this embodiment, in some scenarios, if the second image group is obtained in the manner of S1102, the second image group is not obtained in the manner of S1104; or in some scenarios, if the second image group is obtained in the manner of S1104, the second image group is not obtained in the manner of S1102. In this embodiment, S1102 and S1104 are performed in a selective manner.

In S1105, the first image is deblurred based on the event data, to generate a primary corrected image.

Because an implementation process of S1105 is completely the same as an implementation process of S503, for specific descriptions, refer to related descriptions of S503. Details are not described herein again.

In S1106, image fusion is performed on the second image group and the primary corrected image, to generate a secondary corrected image.

In this embodiment, an implementation of S1106 is completely the same as an implementation process of S504. For specific descriptions, refer to related descriptions of S504. Details are not described herein again.

Further, in another embodiment of this application, S1106 may specifically include the following steps.

In S1106.1, a second image that is in the second image group and for which a time difference between second photographing time of the second image and first photographing time of the first image is the smallest is used as a first reference image corresponding to the first image.

In this embodiment, the second image group includes a plurality of second images, and each second image is associated with corresponding second photographing time. To reduce a spatial change during subsequent fusion and improve a fusion effect, the electronic device may select, from the second image group, the second image whose photographing time is closest to the first photographing time of the first image as the first reference image. In other words, the time difference between the second photographing time of the first reference image and the first photographing time is the smallest.

For example, if the second image group is obtained before the first image is obtained, a last shot second image in the second image group may be used as the first reference image; or if the second image group is obtained after the first image is obtained, an earliest shot second image in the second image group may be used as the first reference image.

In S1106.2, multi-frame fusion noise reduction is performed on the first reference image based on all the second images in the second image group, to obtain a first noise-reduced image.

In this embodiment, the second image group includes a plurality of short-frame images (namely, second images), and the electronic device may perform noise reduction on the first reference image in the second image group in a multi-frame fusion manner, to obtain the first noise-reduced image. The second image group has a higher definition than the first image. However, due to acceleration of a shutter, an amount of entered light is insufficient. Consequently, more noise is introduced. In other words, there is much noise in each second image. The electronic device may implement noise reduction on the first reference image in the multi-frame fusion manner, to improve imaging quality of the first noise-reduced image.

In S1106.3, first optical flow information between the first noise-reduced image and the primary corrected image is calculated, and it is determined, based on the first optical flow information, first spatial location compensation of the first noise-reduced image relative to the primary corrected image.

In this embodiment, the first image and the second image group are not captured at the same time, that is, there is a photographing time deviation between the first image and the second image group, and there is a relative motion between a photographed object and the camera assembly. Therefore, the time deviation causes a spatial displacement of the photographed object in the first image and the first noise-reduced image. To eliminate the spatial displacement, the electronic device may determine the first optical flow information between the first noise-reduced image and the primary corrected image, to compensate for the spatial displacement based on the first optical flow information. In other words, the first spatial location compensation is obtained.

In S1106.4, image fusion is performed on the first noise-reduced image and the primary corrected image based on the first spatial location compensation to obtain the secondary corrected image.

In this embodiment, the electronic device may determine a displacement deviation between the first noise-reduced image and the primary corrected image based on the first spatial location compensation, adjust a location of a shaken photographed object in the first noise-reduced image based on the displacement deviation, and then perform image fusion on an adjusted first noise-reduced image and the primary corrected image. Because the first noise-reduced image is obtained through fusion based on the second images and has a high definition, the secondary corrected image obtained through long-frame and short-frame fusion can still retain not only boundary information of the short-frame images (namely, the second images), but also low-distortion chroma information of the long-frame image (namely, the first image). This improves an imaging effect.

When this embodiment of this application is applied to a single-camera electronic device, the first image and the second image may be obtained in a time-division capturing manner, and a spatial deviation between the first image and the second image is eliminated by calculating an optical flow, to improve an image fusion effect and further improve a subsequent imaging effect. In addition, the second image is obtained before the first image is obtained or after the first image is obtained, so that an amount of data that needs to be processed during image fusion can be reduced. In a scenario in which the electronic device has high processing load or a low processing capability, image deblurring can still be implemented. This increases an applicable scenario range of this embodiment.

Embodiment 3

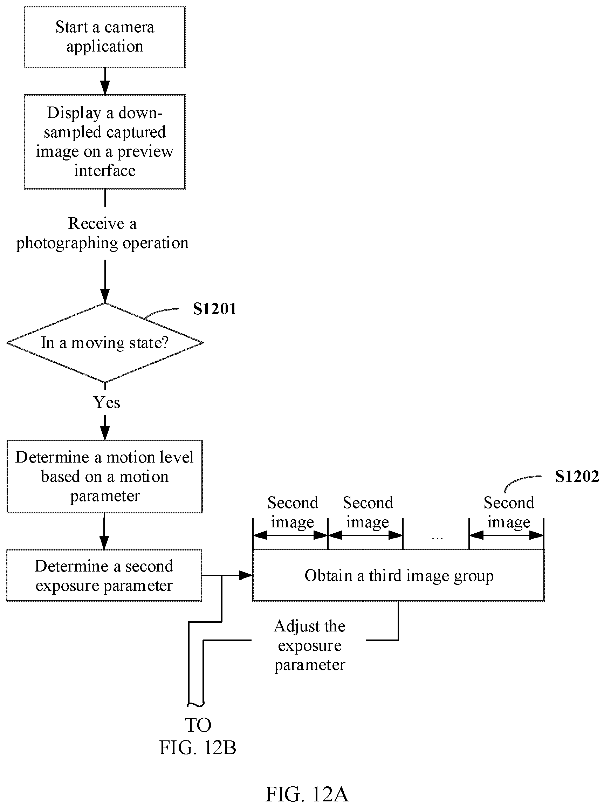

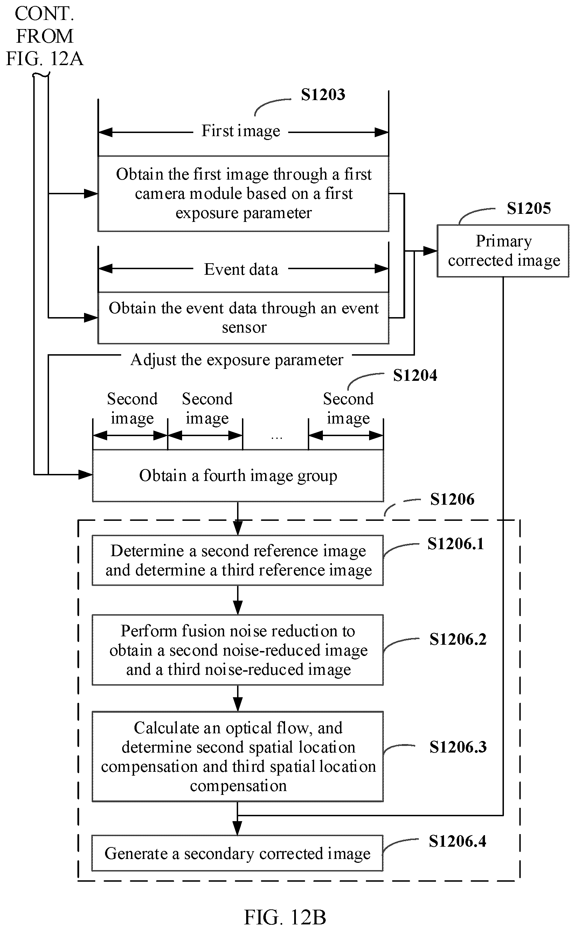

Compared with the electronic device in which a structure of the camera assembly is not limited in Embodiment 1, an electronic device in Embodiment 3 has a camera assembly that specifically includes one camera module and one event sensor. A specific structure is similar to the structure in Embodiment 2. For details, refer to the descriptions of FIG. 10. Specifically, when there is only one camera module configured to obtain an RGB image in the camera assembly, the electronic device needs to obtain a first image and a second image group in a time division manner. In Embodiment 3, the second image group is obtained before the first image and after the first image. To be specific, the second image group may be divided into two image groups, namely, a third image group obtained before the first image and a fourth image group obtained after the first image. FIG. 12A and FIG. 12B are an implementation flowchart of an image processing method according to another embodiment of this application. As shown in FIG. 12A and FIG. 12B, the image processing method provided in this embodiment specifically includes the following steps.

In S1201, a photographing operation initiated by a user is received, a photographing instruction is generated, and it is determined whether the electronic device is in a moving state.

Because an implementation process of S1201 is completely the same as an implementation process of S501, for specific descriptions, refer to related descriptions of S501. Details are not described herein again.

In S1202, in response to the photographing instruction received when the electronic device is in the moving state, the third image group is obtained based on a second exposure parameter.

In S1203, the first image is obtained based on a first exposure parameter, and event data corresponding to the first image is obtained through the event sensor.

In S1204, after the first image is obtained, the fourth image group is obtained based on the second exposure parameter.

In this embodiment, similar to S1102 to S1104, the electronic device may obtain the second image and the first image through the RGB camera module in a time division manner. However, in this embodiment, S1202 and S1204 are not performed in a selective manner. Instead, both steps are performed in this technical solution. The electronic device obtains two groups of second images, namely, the third image group captured before the first image is obtained and the fourth image group captured after the first image is obtained.

In S1205, the first image is deblurred based on the event data, to generate a primary corrected image.

Because an implementation process of S1205 is completely the same as an implementation process of S503, for specific descriptions, refer to related descriptions of S503. Details are not described herein again.

In S1206, image fusion is performed on the second image group and the primary corrected image, to generate a secondary corrected image.

In this embodiment, an implementation of S1206 is completely the same as an implementation process of S504. For specific descriptions, refer to related descriptions of S504. Details are not described herein again.

Further, in another embodiment of this application, S1206 may specifically include the following steps.

In S1206.1, a second image that is in the third image group and for which a time difference between third photographing time of the second image and first photographing time of the first image is the smallest is used as a second reference image corresponding to the first image; and a second image that is in the fourth image group and for which a time difference between fourth photographing time of the second image and the first photographing time of the first image is the smallest is used as a third reference image corresponding to the first image.

In this embodiment, the electronic device selects corresponding reference images from the two image groups. To be specific, a last captured second image in the third image group is selected as the second reference image (because the third image group is obtained before the first image, photographing time of the last captured second image in the third image group is closet to that of the first image), and an earliest captured second image in the fourth image group is selected as the third reference image (because the fourth image group is obtained after the first image, photographing time of the earliest captured second image in the fourth image group is closet to that of the first image).

Because a specific implementation process of S1206.1 is the same as a specific implementation process of S1106.1, for specific descriptions, refer to related descriptions of S1106.1. Details are not described herein again.

In S1206.2, multi-frame fusion noise reduction is performed on the second reference image based on all second images in the third image group to obtain a second noise-reduced image, and multi-frame fusion noise reduction is performed on the third reference image based on all second images in the fourth image group to obtain a third noise-reduced image.

Because a specific implementation process of S1206.2 is the same as a specific implementation process of S1106.2, for specific descriptions, refer to related descriptions of S1106.2. Details are not described herein again.

In this embodiment, the electronic device separately performs image fusion on the two image groups, that is, performs multi-frame image fusion on the third image group once to obtain the second noise-reduced image, and performs multi-frame image fusion on the fourth image group again to obtain the third noise-reduced image.

In S1206.3, second optical flow information between the second noise-reduced image and the primary corrected image is calculated, and second spatial location compensation of the second noise-reduced image relative to the primary corrected image is determined based on the second optical flow information.

Third optical flow information between the third noise-reduced image and the primary corrected image is calculated, and third spatial location compensation of the third noise-reduced image relative to the primary corrected image is determined based on the third optical flow information.

In this embodiment, a process of calculating the spatial location compensation is the same as an implementation process of S1106.3. In other words, for S1206.3, refer to related descriptions of S1106.3. Details are not described herein again.

In S1206.4, image fusion is performed on the second noise-reduced image, the third noise-reduced image, and the primary corrected image based on the second spatial location compensation and the third spatial location compensation, to obtain the secondary corrected image.

Because an implementation process of S1206.4 is completely the same as that of S1106.4, for specific descriptions, refer to S1106.4. Details are not described herein again. It should be noted that, in this embodiment, two image groups are captured, and therefore two noise-reduced images are obtained. The electronic device may fuse the two noise-reduced images and the primary corrected image, so that a confidence level of boundary information can be further improved, to improve a deblurring effect.

In this embodiment of this application, short-frame images are captured before and after the first image, to obtain the two image groups, and complete boundary information of a photographed object in time domain is obtained, to improve a subsequent deblurring effect. Compared with the embodiment in which the image group is captured only once, reliability of the boundary information can be further improved, and an imaging effect of deblurring can be further improved.

Embodiment 4

Compared with the electronic device in which a structure of the camera assembly is not limited in Embodiment 1, an electronic device in Embodiment 4 has a camera assembly that specifically includes two camera modules and one event sensor. One of two cameras may inherit a time sensor. In other words, as described in Embodiment 2, the camera may obtain event data while obtaining a first image. The other camera may obtain a second image when the first image is obtained. In other words, the two cameras may obtain a short-frame image and a long-frame image at the same time, to reduce a spatial displacement deviation between the two images.

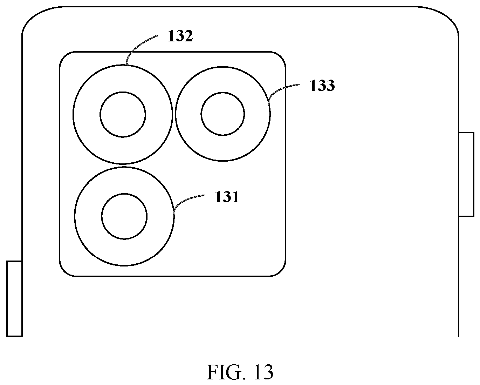

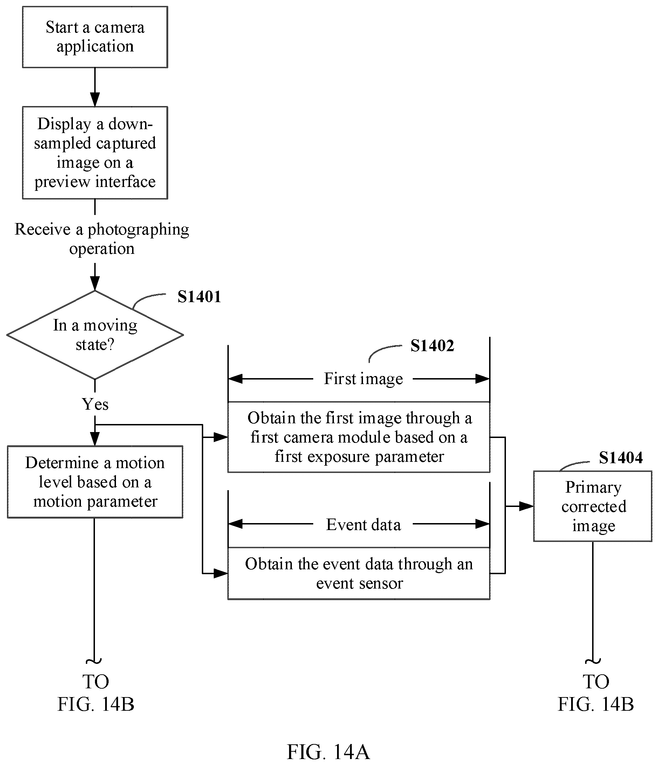

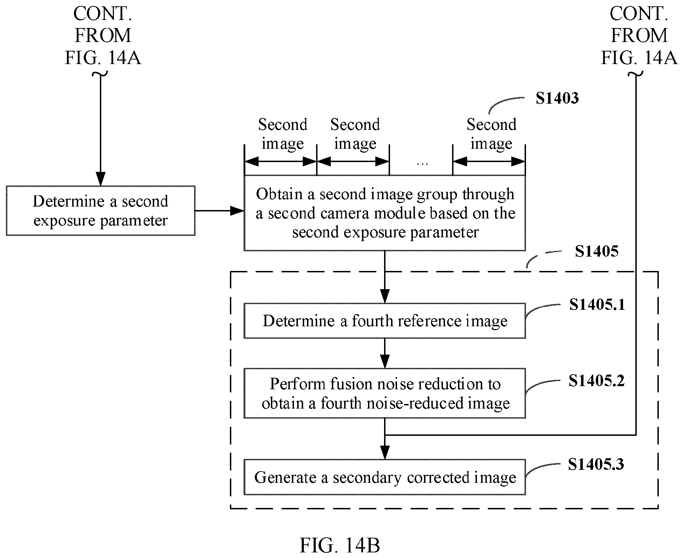

In a possible implementation, the electronic device in Embodiment 4 may be an electronic device having three camera modules. For example, FIG. 13 is a diagram of a structure of a camera assembly according to another embodiment of this application. As shown in FIG. 13, the camera assembly includes three camera modules. One camera module is a camera module that can record the event data, namely, a camera module 131. A primary camera module 132 may be configured to obtain the long-frame image (namely, the first image). A camera module 133 may be configured to obtain the short-frame image (namely, the second image). The electronic device has three cameras, and different cameras may be configured to obtain different types of data. Therefore, the first image, the second image, and the event data can be obtained at the same time, to improve a subsequent image fusion effect. FIG. 14A and FIG. 14B are an implementation flowchart of an image processing method according to another embodiment of this application. As shown in FIG. 14A and FIG. 14B, the image processing method provided in this embodiment specifically includes the following steps.

In S1401, a photographing operation initiated by a user is received, a photographing instruction is generated, and it is determined whether the electronic device is in a moving state.

Because an implementation process of S1401 is completely the same as an implementation process of S501, for specific descriptions, refer to related descriptions of S501. Details are not described herein again.

In S1402, in response to a photographing instruction received when the electronic device is in the moving state, the first image is obtained through a first camera module based on a first exposure parameter, and the event data is obtained through the event sensor.

In S1403, when the first image is obtained, the second image group is obtained through a second camera module based on a second exposure parameter.

In this embodiment, the electronic device is configured with two camera modules that can obtain RGB images. Therefore, the first image and the second image can be obtained at the same time. When obtaining the first image through one of the camera modules (namely, the first camera module), the electronic device may obtain the second image through the other camera module (namely, the second camera module) at the same time. The first camera module is configured to capture the first image based on the first exposure parameter (determined based on photographing environment information). The second camera module is configured to capture the second image based on the second exposure parameter (related to a motion level corresponding to the moving state). In addition, the electronic device may further obtain the corresponding event data through the event sensor at the same time. It should be noted that, if the electronic device is the device shown in FIG. 14A and FIG. 14B, the event sensor is specifically an event camera module, and a corresponding event image, namely, the event data, may be obtained through the event camera module, so that the three types of data are obtained at the same time.

In S1404, the first image is deblurred based on the event data, to generate a primary corrected image.

Because an implementation process of S1404 is completely the same as an implementation process of S503, for specific descriptions, refer to related descriptions of S503. Details are not described herein again.

In S1405, image fusion is performed on the second image group and the primary corrected image, to generate a secondary corrected image.

In this embodiment, an implementation of S1405 is completely the same as an implementation process of S504. For specific descriptions, refer to related descriptions of S504. Details are not described herein again.

In a possible implementation, S1405 specifically includes the following steps.

In S1405.1, a second image that is in the second image group and for which a time difference between second photographing time of the second image and first photographing time of the first image is the smallest is used as a fourth reference image corresponding to the first image.

In this embodiment, when obtaining the first image, the electronic device obtains the second image at the same time. However, because exposure duration of the first image is usually greater than exposure duration of one second image, in a process of obtaining the first image, the second camera module may obtain a plurality of second images. In this case, the electronic device may determine first photographing time based on time at which the user taps a photographing control and the exposure duration. For example, if the user taps the photographing control at 10:26:19.30' and the exposure duration is 30', the electronic device may identify the first photographing time corresponding to the first image as:

$$10:26:19.30'+30'/2=10:26:19.45'$$

The electronic device may use, as the fourth reference image, a second image whose second photographing time is closest to the first photographing time in all the second images.

In a possible implementation, because the second images and the first image are captured at the same time, a second image may be randomly selected as the fourth reference image.

In a possible implementation, the electronic device may sequentially arrange the second images in a sequence of second photographing time, and select a middle second image as the fourth reference image.

In S1405.2, multi-frame fusion noise reduction is performed on the fourth reference image based on all the second images in the second image group, to obtain a fourth noise-reduced image.

Because an implementation process of S1405.2 is completely the same as an implementation process of S1106.2, for specific descriptions, refer to related descriptions of S1106.2. Details are not described herein again.

In S1405.3, the secondary corrected image is generated based on the fourth noise-reduced image and the primary corrected image.

In this embodiment, because the second images and the first image are captured at the same time, a spatial displacement deviation is small. In this case, to improve deblurring efficiency, the electronic device may directly perform image fusion on the fourth noise-reduced image and the primary corrected image, that is, perform spatial displacement compensation without calculating an optical flow, to generate the secondary corrected image, so as to reduce a calculation amount in a deblurring process, reduce computing pressure of the device, improve processing efficiency, and reduce waiting time of the user.

In a possible implementation, S1405.3 may specifically include: calculating fourth optical flow information between the fourth noise-reduced image and the primary corrected image; determining, based on the fourth optical flow information, fourth spatial location compensation of the fourth noise-reduced image relative to the primary corrected image; and performing, based on the fourth spatial location compensation, image fusion on the fourth noise-reduced image and the primary corrected image to obtain the secondary corrected image.

In this embodiment, to improve accuracy of image fusion, the electronic device may further calculate optical flow information (namely, the fourth optical flow information) between the fourth noise-reduced image and the primary corrected image, to eliminate a spatial displacement deviation between the two images. A specific implementation process is completely the same as an implementation process of S1106.3 and S1106.4. For specific descriptions, refer to related descriptions of S1106.3 and S1106.4. Details are not described herein again.

In this embodiment of this application, two camera modules are configured to separately obtain the long-frame image and the short-frame image, so that two types of images are obtained at the same time, and a spatial displacement deviation between the long-frame image and the short-frame image can be reduced, to improve a subsequent fusion effect and further improve a deblurring effect.

Embodiment 5

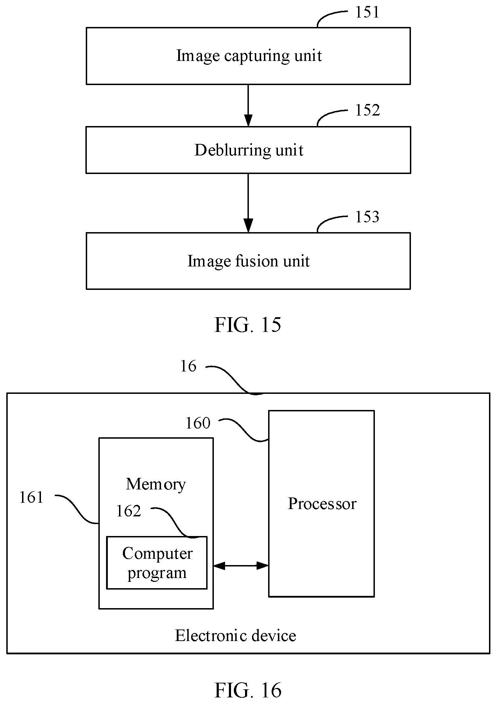

Corresponding to the image processing method in the foregoing embodiments, FIG. 15 is a block diagram of a structure of an image processing apparatus according to an embodiment of this application. For ease of description, only a part related to embodiments of this application is shown.

As shown in FIG. 15, the image processing apparatus includes:

an image capturing unit 151, configured to: obtain a first image based on a first exposure parameter, obtain a second image group based on a second exposure parameter, and obtain, through an event sensor, event data corresponding to the first image, in response to a photographing instruction received when an electronic device is in a moving state, where the second exposure parameter is determined based on the moving state, and the second image group includes at least one second image;

a deblurring unit 152, configured to deblur the first image based on the event data to generate a primary corrected image; and

an image fusion unit 153, configured to perform image fusion on the second image group and the primary corrected image to generate a secondary corrected image.

Optionally, the image capturing unit 151 is specifically configured to:

before the first image is obtained, obtain the second image group based on the second exposure parameter;

or

after the first image is obtained, obtain the second image group based on the second exposure parameter.

Optionally, the image fusion unit 153 includes:

a first reference image determining unit, configured to use, as a first reference image corresponding to the first image, a second image that is in the second image group and for which a time difference between second photographing time of the second image and first photographing time of the first image is the smallest;

a first noise reduction processing unit, configured to perform multi-frame fusion noise reduction on the first reference image based on all the second images in the second image group, to obtain a first noise-reduced image;

a first compensation unit, configured to: calculate first optical flow information between the first noise-reduced image and the primary corrected image, and determine, based on the first optical flow information, first spatial location compensation of the first noise-reduced image relative to the primary corrected image; and

a first fusion unit, configured to perform, based on the first spatial location compensation, image fusion on the first noise-reduced image and the primary corrected image to obtain the secondary corrected image.

Optionally, the second image group includes a third image group and a fourth image group, and the image capturing unit 151 includes:

a first capturing unit, configured to: before the first image is obtained, obtain the third image group based on the second exposure parameter; and

a second capturing unit, configured to: after the first image is obtained, obtain the fourth image group based on the second exposure parameter.

Optionally, the image fusion unit 153 includes:

a second reference image determining unit, configured to: use, as a second reference image corresponding to the first image, a second image that is in the third image group and for which a time difference between third photographing time of the second image and first photographing time of the first image is the smallest; and use, as a third reference image corresponding to the first image, a second image that is in the fourth image group and for which a time difference between fourth photographing time of the second image and the first photographing time of the first image is the smallest;

a second noise reduction processing unit, configured to: perform multi-frame fusion noise reduction on the second reference image based on all second images in the third image group to obtain a second noise-reduced image, and perform multi-frame fusion noise reduction on the third reference image based on all second images in the fourth image group to obtain a third noise-reduced image;

a second compensation unit, configured to: calculate second optical flow information between the second noise-reduced image and the primary corrected image, and determine, based on the second optical flow information, second spatial location compensation of the second noise-reduced image relative to the primary corrected image;

a third compensation unit, configured to: calculate third optical flow information between the third noise-reduced image and the primary corrected image, and determine, based on the third optical flow information, third spatial location compensation of the third noise-reduced image relative to the primary corrected image; and

a second fusion unit, configured to perform image fusion on the second noise-reduced image, the third noise-reduced image, and the primary corrected image based on the second spatial location compensation and the third spatial location compensation, to obtain the secondary corrected image.

Optionally, the electronic device includes at least two camera modules.
The image capturing unit 151 includes:

a third capturing unit, configured to: obtain the first image through a first camera module based on the first exposure parameter, and obtain the event data through the event sensor; and

a fourth capturing unit, configured to: when the first image is obtained, obtain the second image group through a second camera module based on the second exposure parameter.

Optionally, the image fusion unit 153 includes:

a fourth reference image determining unit, configured to use, as a fourth reference image corresponding to the first image, a second image that is in the second image group and for which a time difference between second photographing time of the second image and first photographing time of the first image is the smallest;

a fourth noise reduction processing unit, configured to perform multi-frame fusion noise reduction on the fourth reference image based on all the second images in the second image group, to obtain a fourth noise-reduced image; and

a third fusion unit, configured to generate the secondary corrected image based on the fourth noise-reduced image and the primary corrected image.

Optionally, the third fusion unit includes:

a fourth compensation unit, configured to: calculate fourth optical flow information between the fourth noise-reduced image and the primary corrected image, and determine, based on the fourth optical flow information, fourth spatial location compensation of the fourth noise-reduced image relative to the primary corrected image; and

a fourth fusion unit, configured to perform, based on the fourth spatial location compensation, image fusion on the fourth noise-reduced image and the primary corrected image to obtain the secondary corrected image.

Optionally, the apparatus further includes:

a first preview unit, configured to display the primary corrected image on a preview interface; and
a first storage unit, configured to store the secondary corrected image in a gallery.

Optionally, the apparatus further includes:
a second preview unit, configured to: display the secondary corrected image on a preview interface, and store the secondary corrected image in a gallery.

Optionally, the image capturing unit 151 further includes:

a photographing instruction receiving unit, configured to: receive the photographing instruction initiated by a user, and determine photographing environment information of the electronic device; and
a motion determining unit, configured to: if it is detected, through a motion sensor, that the electronic device is in the moving state, determine the second exposure parameter based on a motion parameter obtained by the motion sensor, and determine the first exposure parameter based on the photographing environment information.

Optionally, the first exposure parameter includes first exposure duration and a first exposure gain, and the second exposure parameter includes second exposure duration and a second exposure gain.

The first exposure duration is greater than the second exposure duration.

The first exposure gain is less than or equal to the second exposure gain.

Therefore, the image processing apparatus provided in this embodiment of this application may also obtain the first image and the second image group based on different exposure parameters when it is detected that the photographing instruction is initiated in the moving state, and obtain the event data corresponding to the first image when the foregoing two types of images are obtained. Because the event data records dynamic change information of a photographed object in the moving state, the first image may be deblurred based on the event data, to obtain the primary corrected image. In addition, the exposure parameter used for the second image group is inconsistent with the exposure parameter used when the first image is captured. Compared with the first image, a first image in the second image group has higher definition. Therefore, the second image group and the primary corrected image can further reduce a blur effect caused by relative motion, and finally the secondary corrected image is generated, to eliminate an image blur caused by relative motion. Compared with an existing image processing technology, this application does not simply shorten exposure duration to obtain a high-definition image, but improves an image definition by performing a double deblurring operation. First, the event data in the photographing process is obtained, and the first image is optimized once to obtain the primary corrected image. Then, image fusion is performed by using the high-definition second image group to further eliminate the blur caused by the relative motion and obtain the secondary corrected image. This ensures imaging quality of an image and improves a definition of the output image while the image blur is removed.

FIG. 16 is a diagram of a structure of an electronic device according to an embodiment of this application. As shown in FIG. 16, an electronic device 16 in this embodiment includes: at least one processor 160 (only one processor is shown in FIG. 16), a memory 161, and a computer program 162 that is stored in the memory 161 and that can be run on the at least one processor 160. When executing the computer program 162, the processor 160 implements steps in any one of the foregoing image processing method embodiments.

The electronic device 16 may be a computing device like a desktop computer, a notebook, a palmtop computer, a cloud server, or a digital camera that is configured with a camera module. The electronic device may include but is not limited to the processor 160 and the memory 161. A person skilled in the art may understand that FIG. 16 is merely an example of the electronic device 16, and does not constitute a limitation on the electronic device 16. The electronic device may include more or fewer components than those shown in the figure, or some components may be combined, or different components may be used. For example, an input/output device, a network access device, or the like may be further included.

The processor 160 may be a central processing unit (Central Processing Unit, CPU). The processor 160 may alternatively be another general-purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a discrete gate or a transistor logic device, or a discrete hardware component. The general-purpose processor may be a microprocessor, or the processor may be any conventional processor or the like.

In some embodiments, the memory 161 may be an internal storage unit of the electronic device 16, for example, a hard disk or memory of the electronic device 16. In some other embodiments, the memory 161 may alternatively be an external storage device of the electronic device 16, for example, a plug-in hard disk, a smart media card (Smart Media Card, SMC), a secure digital (Secure Digital, SD) card, or a flash card (Flash Card) that is configured in the electronic device 16. Further, the memory 161 may alternatively include both an internal storage unit and an external storage device of the electronic device 16. The memory 161 is configured to store an operating system, an application, a boot loader (Boot-Loader), data, another program, for example, program code of the computer program. The memory 161 may further be configured to temporarily store data that has been output or is to be output.

It should be noted that, content such as information exchange and execution processes between the foregoing apparatuses/units are based on a same concept as those in the method embodiments of this application. For specific functions and brought technical effects, refer to the method embodiments. Details are not described herein again.

It may be clearly understood by persons skilled in the art that, for convenient and brief description, division of the foregoing functional units and modules is merely used as an example for illustration. In actual application, the foregoing functions can be allocated to different functional units and modules and implemented based on a requirement, that is, an inner structure of the apparatus is divided into different functional units and modules to implement all or some of the functions described above. Functional units and modules in the embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units and modules are merely used to distinguish each other, and are not intended to limit the protection scope of this application. For a specific working process of the units and modules in the foregoing system, refer to a corresponding process in the foregoing method embodiments. Details are not described herein again.

An embodiment of this application further provides an electronic device. The electronic device includes: at least one processor, a memory, and a computer program that is stored in the memory and that can be run on the at least one processor. When executing the computer program, the processor implements the steps in any one of the foregoing method embodiments.

An embodiment of this application further provides a computer-readable storage medium. The computer-readable storage medium stores a computer program. When the computer program is executed by a processor, the steps in the foregoing method embodiments can be implemented.

An embodiment of this application provides a computer program product. When the computer program product runs on a mobile terminal, the steps in the foregoing method embodiments can be implemented by the mobile terminal.

When the integrated unit is implemented in the form of the software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the foregoing method embodiments can be implemented. The computer program includes computer program code, and the computer program code may be in a source code form, an object code form, an executable file, an intermediate form, or the like. The computer-readable medium may include at least any entity or apparatus that can carry the computer program code to a photographing apparatus/an electronic device, a recording medium, a computer memory, a read-only memory (ROM, Read-Only Memory), a random access memory (RAM, Random Access Memory), an electrical carrier signal, a telecommunications signal, and a software distribution medium, for example, a USB flash drive, a removable hard disk, a magnetic disk, or an optical disk. In some jurisdictions, according to legislation and patent practice, the computer-readable medium cannot be an electrical carrier signal or a telecommunications signal.

In the foregoing embodiments, the descriptions of each embodiment have respective focuses. For a part that is not described in detail or recorded in an embodiment, refer to related descriptions in other embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

In embodiments provided in this application, it should be understood that the disclosed apparatus/network device and method may be implemented in other manners. For example, the described apparatus/network device embodiments are merely examples. For example, division into the modules/units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

The foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

**Claims**

1. An image processing method, comprising:

obtaining a first image based on a first exposure parameter, obtaining a second image group based on a second exposure parameter, and obtaining, through an event sensor, event data corresponding to the first image, in response to a photographing instruction received when an electronic device is in a moving state, wherein the second exposure parameter is determined based on the moving state, the second image group comprises at least one second image, and the second image has a higher definition than the first image; deblurring the first image based on the event data to generate a primary corrected image; and performing image fusion on the second image group and the primary corrected image to generate a secondary corrected image.

2. The method according to claim 1, wherein the obtaining a first image based on a first exposure parameter, obtaining at least one second image based on a second exposure parameter, and obtaining, through an event sensor, event data corresponding to the first image, in response to a photographing instruction initiated in a moving state comprises:

before the first image is obtained, obtaining the second image group based on the second exposure parameter;
or
after the first image is obtained, obtaining the second image group based on the second exposure parameter.

3. The method according to claim 2, wherein the second image group comprises a plurality of second images, and the performing image fusion on the second image group and the primary corrected image to generate a secondary corrected image comprises:

using, as a first reference image corresponding to the first image, a second image that is in the second image group and for which a time difference between second photographing time of the second image and first photographing time of the first image is the smallest; performing multi-frame fusion noise reduction on the first reference image based on all the second images in the second image group, to obtain a first noise-reduced image; calculating first optical flow information between the first noise-reduced image and the primary corrected image, and determining, based on the first optical flow information, first spatial location compensation of the first noise-reduced image relative to the primary corrected image; and performing, based on the first spatial location compensation, image fusion on the first noise-reduced image and the primary corrected image to obtain the secondary corrected image.

4. The method according to claim 1, wherein the second image group comprises a third image group and a fourth image group, and the obtaining a first image based on a first exposure parameter, obtaining at least one second image based on a second exposure parameter, and obtaining, through an event sensor, event data corresponding to the first image, in response to a photographing instruction initiated in a moving state comprises:

before the first image is obtained, obtaining the third image group based on the second exposure parameter;
and
after the first image is obtained, obtaining the fourth image group based on the second exposure parameter.

5. The method according to claim 4, wherein the performing image fusion on the second image group and the primary corrected image to generate a secondary corrected image comprises:

using, as a second reference image corresponding to the first image, a second image that is in the third image group and for which a time difference between third photographing time of the second image and first photographing time of the first image is the smallest; and using, as a third reference image corresponding to the first image, a second image that is in the fourth image group and for which a time difference between fourth photographing time of the second image and the first photographing time of the first image is the smallest;

performing multi-frame fusion noise reduction on the second reference image based on all second images in the third image group to obtain a second noise-reduced image, and performing multi-frame fusion noise reduction on the third reference image based on all second images in the fourth image group to obtain a third noise-reduced image;

calculating second optical flow information between the second noise-reduced image and the primary corrected image, and determining, based on the second optical flow information, second spatial location compensation of the second noise-reduced image relative to the primary corrected image;

calculating third optical flow information between the third noise-reduced image and the primary corrected image, and determining, based on the third optical flow information, third spatial location compensation of the third noise-reduced image relative to the primary corrected image; and

performing image fusion on the second noise-reduced image, the third noise-reduced image, and the primary corrected image based on the second spatial location compensation and the third spatial location compensation, to obtain the secondary corrected image.

6. The method according to claim 1, wherein the electronic device comprises at least two camera modules; and

the obtaining a first image based on a first exposure parameter, obtaining a second image group based on a second exposure parameter, and obtaining, through an event sensor, event data corresponding to the first image, in response to a photographing instruction received when an electronic device is in a moving state comprises:

obtaining the first image through a first camera module based on the first exposure parameter, and obtaining the event data through the event sensor; and

when the first image is obtained, obtaining the second image group through a second camera module based on the second exposure parameter.

7. The method according to claim 6, wherein the performing image fusion on the second image group and the primary corrected image to generate a secondary corrected image comprises:

using, as a fourth reference image corresponding to the first image, a second image that is in the second image group and for which a time difference between second photographing time of the second image and first photographing time of the first image is the smallest; performing multi-frame fusion noise reduction on the fourth reference image based on all the second images in the second image group, to obtain a fourth noise-reduced image; and generating the secondary corrected image based on the fourth noise-reduced image and the primary corrected image.

8. The method according to claim 7, wherein the generating the secondary corrected image based on the fourth noise-reduced image and the primary corrected image comprises:

calculating fourth optical flow information between the fourth noise-reduced image and the primary corrected image, and determining, based on the fourth optical flow information, fourth spatial location compensation of the fourth noise-reduced image relative to the primary corrected image; and performing, based on the fourth spatial location compensation, image fusion on the fourth noise-reduced image and the primary corrected image to obtain the secondary corrected image.

9. The method according to any one of claims 1 to 8, wherein after the deblurring the first image based on the event data to generate a primary corrected image, the method further comprises:

displaying the primary corrected image on a preview interface; and after the performing image fusion on the second image group and the primary corrected image to generate a secondary corrected image, the method further comprises: storing the secondary corrected image in a gallery.

10. The method according to any one of claims 1 to 8, wherein after the performing image fusion on the second image group and the primary corrected image to generate a secondary corrected image, the method further comprises:

displaying the secondary corrected image on a preview interface, and storing the secondary corrected image in a gallery.

11. The method according to any one of claims 1 to 8, wherein before the obtaining a first image based on a first exposure parameter, obtaining a second image group based on a second exposure parameter, and obtaining, through an event sensor, event data corresponding to the first image, in response to a photographing instruction received when an electronic device is in a moving state, the method further comprises:

receiving the photographing instruction initiated by a user, and determining photographing environment information of the electronic device; and

if it is detected, through a motion sensor, that the electronic device is in the moving state, determining the second exposure parameter based on a motion parameter obtained by the motion sensor, and determining the first exposure parameter based on the photographing environment information.

12. The method according to any one of claims 1 to 8, wherein the first exposure parameter comprises first exposure duration and a first exposure gain, and the second exposure parameter comprises second exposure duration and a second exposure gain;

the first exposure duration is greater than the second exposure duration; and

the first exposure gain is less than or equal to the second exposure gain.

13. An image processing apparatus, comprising:

an image capturing unit, configured to: obtain a first image based on a first exposure parameter, obtain a second image group based on a second exposure parameter, and obtain, through an event sensor, event data corresponding to the first image, in response to a photographing instruction received when an electronic device is in a moving state, wherein the second exposure parameter is determined based on the moving state, and the second image group comprises at least one second image;

a deblurring unit, configured to deblur the first image based on the event data to generate a primary corrected image; and

an image fusion unit, configured to perform image fusion on the second image group and the primary corrected image to generate a secondary corrected image.

14. An electronic device, wherein the electronic device comprises a memory, a processor, and a computer program that is stored in the memory and that is executable on the processor, and when the processor executes the computer program, steps in the method according to any one of claims 1 to 12 are implemented.

15. A computer-readable storage medium, wherein the computer-readable storage medium stores a computer program, and when the computer program is executed by a processor, steps in the method according to any one of claims 1 to 12 are implemented.

Electronic device 100

FIG. 1

| Application layer | Camera | Calendar | Map | WLAN | Music | Messaging |
| | Email | WeChat | WPS | Bluetooth | Videos | ... |

| Application framework layer | Window manager | Content provider | Phone manager | Resource manager |
| | Notification manager | View system | ... | |

| System layer | Surface manager | Three-dimensional graphics processing library | | Android runtime |
| | Two-dimensional graphics engine | Media library | ... | |

| Kernel layer | Display driver | Camera driver | |
| | Audio driver | Sensor driver | ... |

FIG. 2

Photosensitive
element

Aperture

Intense
ambient
light

Effective
light entry
area

Photosensitive
element

Aperture

Weak
ambient
light

Effective
light entry
area

FIG. 3

Camera module

Focus plane

Plane on which a photographed object is located

B

A

FIG. 4

Start a camera application

Display a down-sampled captured image on a preview interface

**S501**

Receive a photographing operation **S501.1**

In a moving state?

No → Obtain a target image based on a first exposure parameter **S501.2**

Yes

Determine a motion level based on a motion parameter **S501.3**

Determine a second exposure parameter

Second image | Second image | ... | Second image

Obtain a second image group **S502**

First image

Obtain the first image based on a first exposure parameter

Event data

Obtain the event data through an event sensor

Primary corrected image **S503**

Generate a secondary corrected image **S504**

FIG. 5

FIG. 6(a)

FIG. 6(b)

Area 1

(a)

Area 2

(b)

FIG. 7

FIG. 8(a)

FIG. 8(b)

FIG. 8(c)

FIG. 9(a)

FIG. 9(b)

(a)

(b)

FIG. 10

Start a camera application

Display a down-sampled captured image on a preview interface

Receive a photographing operation

**S1101**

In a moving state?

Yes

Determine a motion level based on a motion parameter

Determine a second exposure parameter

**S1202**

Second image | Second image | ... | Second image

Obtain a second image group

Adjust the exposure parameter

TO
FIG. 11B

FIG. 11A

CONT.
FROM
FIG. 11A

S1103

First image

Obtain the first image based on a
first exposure parameter

S1105

Primary
corrected image

Event data

Obtain the event data through an
event sensor

Adjust the exposure parameter

S1104

Second
image
Second
image
...
Second
image

Obtain a second image group

S1106

Determine a first reference image                    S1106.1

Perform fusion noise reduction to
obtain a first noise-reduced image                   S1106.2

Calculate an optical flow, and
determine first spatial location
compensation                                          S1106.3

Generate a secondary corrected
image                                                 S1106.4

FIG. 11B

Start a camera
application

↓

Display a down-
sampled captured
image on a preview
interface

↓

Receive a
photographing operation

↓

In a moving state? — **S1201**

Yes

↓

Determine a motion level
based on a motion
parameter

↓

Determine a second
exposure parameter

— **S1202**

Second    Second          Second
image     image    ...     image

Obtain a third image group

Adjust the
exposure
parameter

TO
FIG. 12B

FIG. 12A

CONT.
FROM
FIG. 12A

**S1203**

First image

Obtain the first image through a first camera module based on a first exposure parameter

**S1205**

Primary corrected image

Event data

Obtain the event data through an event sensor

Adjust the exposure parameter

**S1204**

Second image | Second image | Second image

...

Obtain a fourth image group

**S1206**

Determine a second reference image and determine a third reference image — **S1206.1**

Perform fusion noise reduction to obtain a second noise-reduced image and a third noise-reduced image — **S1206.2**

Calculate an optical flow, and determine second spatial location compensation and third spatial location compensation — **S1206.3**

Generate a secondary corrected image — **S1206.4**

FIG. 12B

FIG. 13

```
┌─────────────────┐
│  Start a camera │
│   application   │
└─────────────────┘
         │
         ▼
┌─────────────────┐
│ Display a down- │
│ sampled captured│
│   image on a    │
│ preview interface│
└─────────────────┘
         │
Receive a photographing
       operation
         │
         ▼
       S1401
   ╱In a moving╲
   ╲   state?  ╱
         │
        Yes
         │
         ▼
┌─────────────────┐
│ Determine a motion│
│  level based on a │
│ motion parameter  │
└─────────────────┘
```

S1402

◄─────── First image ───────►

┌──────────────────────────────┐
│ Obtain the first image through a │
│ first camera module based on a   │
│   first exposure parameter       │
└──────────────────────────────┘

◄─────── Event data ───────►

┌──────────────────────────────┐
│ Obtain the event data through an │
│        event sensor              │
└──────────────────────────────┘

S1404

┌─────────────┐
│  Primary    │
│  corrected  │
│   image     │
└─────────────┘

TO
FIG. 14B

TO
FIG. 14B

FIG. 14A

CONT.
FROM
FIG. 14A

CONT.
FROM
FIG. 14A

S1403

| Second image | Second image | ... | Second image |

Determine a second exposure parameter

Obtain a second image group through a second camera module based on the second exposure parameter

S1405

Determine a fourth reference image — S1405.1

Perform fusion noise reduction to obtain a fourth noise-reduced image — S1405.2

Generate a secondary corrected image — S1405.3

FIG. 14B

151

| Image capturing unit |
| --- |

↓

152

| Deblurring unit |
| --- |

↓

153

| Image fusion unit |
| --- |

FIG. 15

16

Electronic device

160

Memory

161

162

Computer program

Processor

FIG. 16

## INTERNATIONAL SEARCH REPORT

| International application No. |
|---|
| **PCT/CN2023/119713** |

### A. CLASSIFICATION OF SUBJECT MATTER

H04N23/951(2023.01)i

According to International Patent Classification (IPC) or to both national classification and IPC

### B. FIELDS SEARCHED

Minimum documentation searched (classification system followed by classification symbols)

IPC:H04N23/-

Documentation searched other than minimum documentation to the extent that such documents are included in the fields searched

Electronic data base consulted during the international search (name of data base and, where practicable, search terms used)

CNABS, CNTXT, ENTXTC, WPABSC, CNKI, VEN, ENTXT, USTXT, WOTXT, JPTXT, IEEE: 相机, 拍摄, 拍照, 抖动, 运动, 位移, 改变, 调整, 降低, 缩短, 减少, 曝光, 时长, 时间, 长曝光, 短曝光, 图像, 合成, 融合, 事件, 动态视觉, 传感器, 像素, 亮度, 变化, 去模糊, 去抖动, 去鬼影, 降噪, 校正, camera, photograph, motion, move, adjust, reduce, decrease, exposure, time, long exposure, short exposure, image, frame, fuse, compose, event, dynamic vision, sensor, pixel, brightness, change, deblurring, debounce, denoise

### C. DOCUMENTS CONSIDERED TO BE RELEVANT

| Category* | Citation of document, with indication, where appropriate, of the relevant passages | Relevant to claim No. |
|---|---|---|
| Y | CN 110121882 A (HUAWEI TECHNOLOGIES CO., LTD.) 13 August 2019 (2019-08-13) description, paragraphs 38-113 | 1-15 |
| Y | CN 111445414 A (BEIJING SENSETIME TECHNOLOGY DEVELOPMENT CO., LTD.) 24 July 2020 (2020-07-24) description, paragraphs 28-32 | 1-15 |
| A | CN 101489035 A (SANYO ELECTRIC CO., LTD.) 22 July 2009 (2009-07-22) entire document | 1-15 |
| A | JP 2013225724 A (CANON K.K.) 31 October 2013 (2013-10-31) entire document | 1-15 |
| A | US 2017116904 A1 (SAMSUNG DISPLAY CO., LTD.) 27 April 2017 (2017-04-27) entire document | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 December 2023** | **20 December 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
|---|
| **PCT/CN2023/119713** |

| Patent document cited in search report | | | Publication date (day/month/year) | Patent family member(s) | | | Publication date (day/month/year) |
|---|---|---|---|---|---|---|---|
| CN | 110121882 | A | 13 August 2019 | WO | 2019071613 | A1 | 18 April 2019 |
| CN | 111445414 | A | 24 July 2020 | US | 2022020124 | A1 | 20 January 2022 |
| | | | | SG | 11202110306 | WA | 28 October 2021 |
| | | | | TW | 202137767 | A | 01 October 2021 |
| | | | | TWI | 769523 | B | 01 July 2022 |
| | | | | WO | 2021189704 | A1 | 30 September 2021 |
| | | | | HK | 40024744 | A0 | 18 December 2020 |
| | | | | CN | 111445414 | B | 14 April 2023 |
| CN | 101489035 | A | 22 July 2009 | US | 2009179995 | A1 | 16 July 2009 |
| | | | | JP | 2009207118 | A | 10 September 2009 |
| | | | | JP | 5213670 | B2 | 19 June 2013 |
| JP | 2013225724 | A | 31 October 2013 | JP | 6108680 | B2 | 05 April 2017 |
| US | 2017116904 | A1 | 27 April 2017 | US | 10026350 | B2 | 17 July 2018 |
| | | | | KR | 20170047449 | A | 08 May 2017 |
| | | | | KR | 102425404 | B1 | 28 July 2022 |

Form PCT/ISA/210 (patent family annex) (July 2022)

**EP 4 576 803 A1**

**Patent documents cited in the description**

- CN 202211263488